# EUROPEAN PATENT SPECIFICATION

(11) **EP 0 989 496 B1**
(45) Date of publication and mention of the grant of the patent: **27.04.2005**
(21) Application number: 99202839.9
(22) Date of filing: 01.09.1999
(51) Int. Cl.: G06F 12/08

(54) **Improved memory hierarchy for processors and coherence protocol therefor**
Verbesserte Speicherhierarchie für Prozessoren und Koherenzprotokoll hierfür
Hierarchie de mémoires améliorée et protocole de cohérence correspondant

(30) Priority: 01.09.1998 US 98797 P
(43) Date of publication of application: 29.03.2000
(73) Proprietor: Texas Instruments Incorporated, Dallas, Texas 75251 (US)
(72) Inventor: Anderson, Timothy, Dallas, Texas 75218 (US); Bosshart, Patrick W., Plano, Texas 75025 (US); Sanjive, Agarnale, Richardson, Texas 75082 (US)
(74) Representative: Holt, Michael

(56) References cited:
- EP-A- 0 855 645
- US-A- 5 671 391
- QING YANG ET AL: "DESIGN OF AN ADAPTIVE CACHE COHERENCE PROTOCOL FOR LARGE SCALE MULTIPROCESSORS" IEEE TRANSACTIONS ON PARALLEL AND DISTRIBUTED SYSTEMS,US,IEEE INC, NEW YORK, vol. 3, no. 3, 1 May 1992 (1992-05-01), pages 281-293, XP000274359 ISSN: 1045-9219
- SWEAZY P ET AL: "A CLASS OF COMPATIBLE CACHE CONSISTENCY PROTOCOLS AND THEIR SUPPORT BY THE IEEE FUTUREBUS" PROCEEDINGS OF THE ANNUAL INTERNATIONAL SYMPOSIUM ON COMPUTER ARCHITECTURE,US,WASHINGTON, IEEE COMP. SOC. PRESS, vol. SYMP. 13, 2 June 1986 (1986-06-02), pages 414-423, XP002039991

## Description

### FIELD OF THE INVENTION

This invention generally relates to computer systems and improved memory hierarchies for processors.

### BACKGROUND OF THE INVENTION

Increasing performance of a computer system is an ongoing goal in the computer industry. Techniques for enhancing performance have included faster processors, wider busses, and deeper instruction pipelines. As processor performance has increased, the need for faster memory accesses has also increased. A memory hierarchy provides an economical means for meeting the demands for faster memory access. Generally, a memory hierarchy contains several memories of different speeds and sizes. The memory system is designed such that each level of memory closer to the processor is smaller, faster and usually more expensive. Each level of memory usually contains a subset of the information contained in the memory level above it. The lowest level or levels of the memory hierarchy, those closest to the processor, usually consist of cache. Cache may be used for data, instructions, or both. It is the goal of cache memory to contain the most frequently used data or instructions.

Each cache block has associated with it information necessary to determine if that block contains the desired information. For example, most caches have an address tag for each block which is checked to determine if it matches the address from the CPU. Additionally, a valid bit is commonly used to determine whether or not the cache block contains valid information.

On a cache hit the processor obtains information from the cache without having to access the slower memory or memories. On a cache miss the processor must go to the next level of memory or cache below the missed cache to try to retrieve the data and possibly levels of memory beyond the next level. On a cache miss, blocks of data which contain the desired information are sometimes transferred from the lower levels of memory to the cache.

The way in which information may be placed in a cache varies. A cache may be direct mapped, fully associative or set associative. In a direct mapped cache there is only one location in which a given block of information may be stored. A fully associative cache allows a block to be stored in any location within the cache. In a set associative cache the block may be stored in one of several locations within the cache depending on the number of sets. For example, in a two way set associative cache there are two locations where a given block can be stored. The location or locations in which a block may be stored is dependent upon the block address.

In writing to a cache there are generally two options. In the write through option, information is written both to the cache block and to the main memory block. In the write back cache option, the information is written only to the cache block and a modified block in the cache is written to main memory only when it is replaced. A status bit called the dirty bit is often used to indicate whether the block is dirty or clean. A block is dirty if it has been modified while in the cache, and clean if it has not been modified.

In a multiprocessor system, a coherency protocol is required to ensure that a processor is using the most recent copy of data and that no more than one processor is modifying the data at one time. A commonly used protocol is the MESI protocol which indicates the state of the data block in a cache with respect to external memory. The MESI protocol utilizes four states: Modified, Exclusive, Shared, and Invalid.

Cache performance is dependent on the hit time, miss rate and miss penalty. Hit time is the time necessary to access the cache. Miss rate is the fraction of accesses that are not found in the cache. Miss penalty is the time required to service a cache miss. If cache performance is good, a cache can significantly decrease the time required for memory accesses thereby increasing performance of the overall computer system.

The invention is defined by the features as claimed.

### Prior art

The article from QING YANG ET AL: "DESIGN OF AN ADAPTIVE CACHE COHERENCE PROTOCOL FOR LARGE SCALE MULTIPROCESSORS" in IEEE TRANSACTIONS ON PARALLEL AND DISTRIBUTED SYSTEMS,US,IEEE INC, NEW YORK, vol. 3, no. 3, 1 May 1992 (1992-05-01), pages 281-293, XP000274359 ISSN: 1045-9219 describes a multilevel cache hierarchy where write is always limited to the local cache and only tags in further cache levels are updated up to a superior (master) cache. Copying back data to an ancestor cache is not necessary when the data is not modified.

US-A-5 671 391 (KNOTTS BRIAN W) (1997-09-23) describes a multilevel cache system where the EXCLUSIVE state of the MESI protocol is replaced by a LATEST state which indicates the cache level with the most recent copy of data in MODIFIED state, from which level the snoop or copy back need not propagate further up to cache levels closer to the processor.

### BRIEF DESCRIPTION OF THE DRAWINGS

In the drawings:
Figure 1 depicts an exemplary data processing system employing the memory hierarchy of the present invention in an exemplary superscalar pipelined microprocessor;
Figure 1A depicts exemplary execution units for the microprocessor of Figure 1;
Figure 2 depicts the multi-level memory hierarchy of the present invention for the microprocessor of Figure 1;
Figure 2A depicts a simplified block diagram of the multi-level memory hierarchy of Figure 2;
Figures 3A and 3B depict various operations by the level zero data (L0D) cache as a function of clock cycles;
Figure 4 depicts a logical layout of the L0D cache data memory;
Figure 5 depicts a physical layout of the memory of Figure 4;
Figure 6 depicts a pseudo LRU state tree for a 4-way associative cache;
Figure 7 depicts the hit-or-miss interaction between two pipes (P0, P1) accessing the same set in the L0D cache of the microprocessor of Figure 1;
Figure 8 depicts circuitry for computing next LRU and merge LRU from MRU-way, vhit, and LRU as used in Figure 7;
Figure 9 depicts level 2 (L2) cache line state transitions for read misses and write allocates;
Figure 10 depicts level 2 (L2) cache line transitions for write hits;
Figure 11 depicts level 1 (L1) data cache line state transitions for unlocked writes;
Figure 12 depicts L1 data cache line state transitions for cacheable read misses;
Figure 13 depicts L0D cache line state transitions for cacheable read misses;
Figure 14 depicts L0D cache line state transitions for unlocked writes;
Figure 15 depicts a preferred L2 cache tag structure;
Figure 16 depicts a preferred L1 data cache tag structure;
Figure 17 depicts a preferred L0 data cache tag structure;
Figure 18 depicts a preferred L1 instruction cache tag structure;
Figure 19 depicts a preferred TLB tag structure;
Figure 20 depicts a preferred BTB tag structure;
Figure 21 depicts the initial and final states for a cache line based upon a read;
Figures 22A, B and C depict the initial and final states for a cache line based upon a write;
Figures 23A and B depict the final state of a line in a cache and its superior cache for a read miss;
Figure 24 depicts the final state of a line in a cache and its superior cache for a write miss;
Figure 25 depicts the final states of lines of a first embodiment of a multi-level cache for various operations;
Figure 26 depicts the final states of lines of a different embodiment of multi-level cache for various operations;
Figures 27A and B depict the initial and final states for a line of the L0D cache and L1/L2 cache for write-throughs;
Figure 28 depicts the initial and final states for a line of the L1/L2 cache for write-throughs as a function of selected external control signals;
Figure 29 depicts state changes for the memory hierarchy of Figure 2 for write-through operations starting from an initial shared state;
Figure 30 depicts state transitions and bus transactions for bus-misaligned write-throughs;
Figure 31 depicts an exemplary encoding scheme for two directory bits in the L2 cache;
Figure 32 depicts a state machine diagram for determining directory states as a function of various operations;
Figure 33 depicts directory states as a function of various operations when a fourth directory state is provided;
Figure 34 depicts encoding for an internal snoop command and resulting cache operations;
Figure 35 depicts snoop commands generated by L2 cache for various operations of L1D cache;
Figure 36 depicts initial and final line states in a cache as a function of cache opcodes;
Figure 37 depicts a block diagram of a portion of Figure 1 illustrating block snoop operations.

Corresponding numerals and symbols in the different figures refer to corresponding parts unless otherwise indicated.

### DETAILED DESCRIPTION

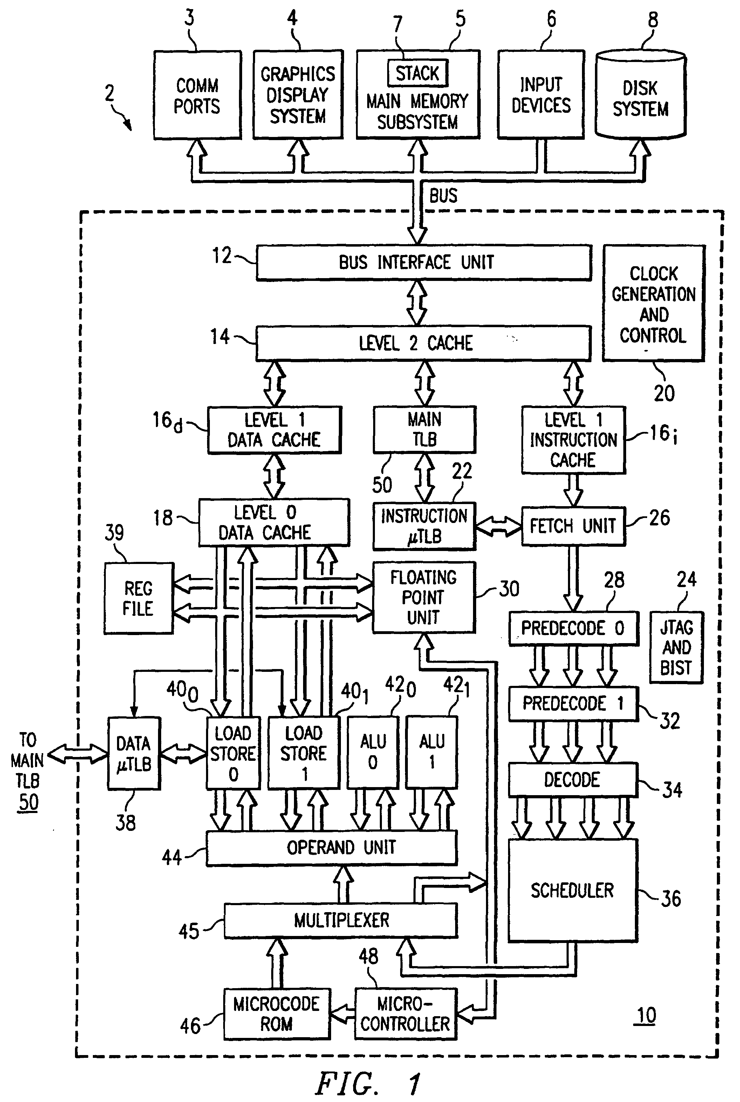

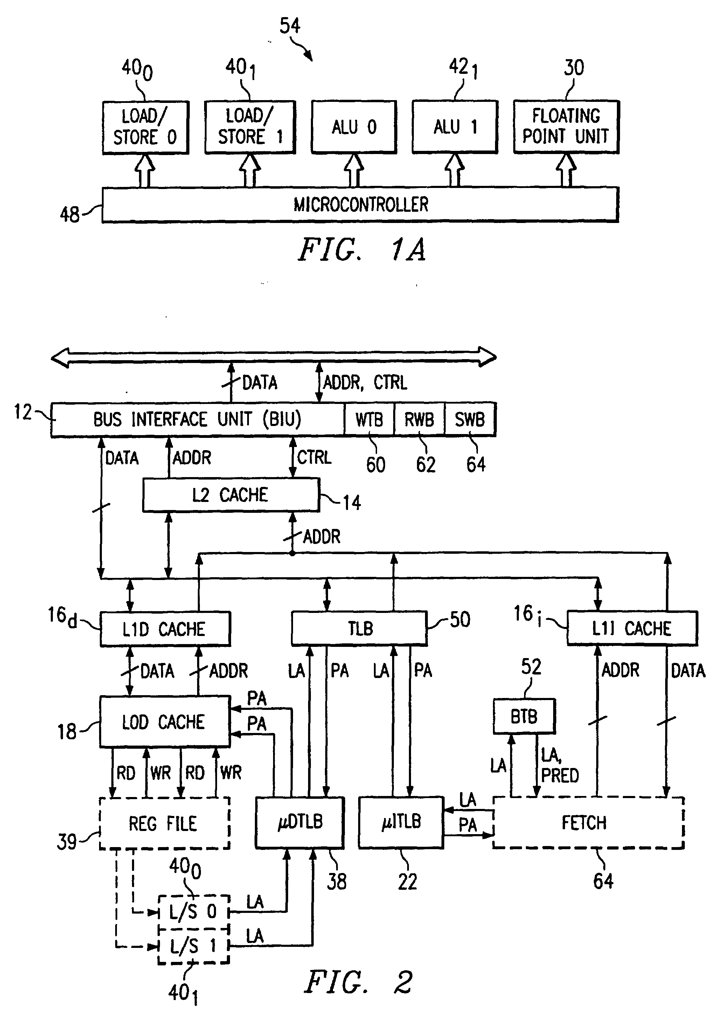

Referring to Figure 1, an exemplary data processing system 2, including an exemplary superscalar pipelined microprocessor 10 within which the preferred embodiment of the invention is implemented, will be described. It is to be understood that the architecture of system 2 and of microprocessor 10 is described herein by way of example only, as it is contemplated that the present invention may be utilized in processors of various architectures, with particular benefit to those of the superscalar type. It is therefore contemplated that one of ordinary skill in the art, having reference to this specification, will be readily able to implement the present invention in other such processor architectures.

Microprocessor 10, as shown in Figure 1, is connected to other system devices by way of bus B. While bus B, in this example, is shown as a single bus, it is of course contemplated that bus B may represent multiple buses having different speeds and protocols, as is known in computers, for example, utilizing the PCI local bus architecture; single bus B is illustrated here merely by way of example and for its simplicity. System 2 contains such subsystems as communication ports 3 (which may include modem ports and modems, network interfaces, and the like), graphics display system 4 (which may include video memory, video processors, a graphics monitor), main memory system 5 which is typically implemented by way of dynamic random access memory (DRAM), input devices 6 (which may include a keyboard, a pointing device, and the interface circuitry therefor), and disk system 8 (which may include hard disk drives, floppy disk drives, and CD-ROM drives). It is therefore contemplated that system 2 of Figure 1 corresponds to a notebook computer, desktop computer or workstation, as are now common in the art. Of course, other system implementations of microprocessor 10 can also benefit from the present invention, as will be recognized by those of ordinary skill in the art.

Microprocessor 10 includes bus interface unit (BIU) 12 that is connected to bus B, and which controls and effects communication between microprocessor 10 and the other elements in system 2. BIU 12 includes the appropriate control and clock circuitry to perform this function, including write buffers for increasing the speed of operation and timing circuitry so as to synchronize the results of internal microprocessor 10 operation with bus B timing constraints. Microprocessor 10 also includes clock generation and control circuitry 20 which, in this exemplary microprocessor 10, generates internal clock phases based upon the bus clock from bus B; the frequency of the internal clock phases, in this example, may be selectably programmed as a multiple of the frequency of the bus clock.

As is evident in Figure 1, microprocessor 10 has three levels of internal cache memory, with the highest of these as level 2 (L2) cache 14, which is connected to BIU 12. In this example, level 2 cache 14 is a "unified" cache, e.g. one storing both code and data, and is configured to receive all cacheable data and cacheable instructions from bus B via BIU 12, such that much of the bus traffic presented by microprocessor 10 is accomplished via level 2 cache 14. Of course, microprocessor 10 may also effect bus traffic around cache 14, by treating certain bus reads and writes as "not cacheable". Level 2 cache 14, as shown in Figure 1, is connected to two level 1 caches 16; level 1 data (L1D) cache 16_{d} is dedicated to data, while level 1 instruction (L1I) cache 16ᵢ is dedicated to instructions. Power consumption by microprocessor 10 is minimized by only accessing level 2 cache 14 in the event of cache misses of the appropriate one of the level 1 caches 16. Furthermore, on the data side, a level 0 (L0) cache 18 is provided, which, in this example, is a fully dual-ported cache. All the caches may further comprise control circuitry to effect the necessary transactions and maintain required information such as coherency data.

As shown in Figure 1, and as noted above, microprocessor 10 is of the superscalar type. In this example, multiple execution units are provided within microprocessor 10, allowing up to four instructions to be simultaneously executed in parallel. These execution units 54, shown in Figure 1A, include two ALUs 42₀, 42₁ for processing conditional branch, integer, and logical operations, floating-point unit (FPU) 30, two load-store units 40₀, 40₁, and microcontroller 48. The two load-store units 40 utilize the two ports to L0 cache 18, for true parallel access thereto, and also perform load and store operations to registers in register file 39. In one embodiment, register file 39 may be contained in operand unit 44. Micro data translation lookaside buffer (µDTLB) 38 is provided to translate logical data addresses into physical addresses.

These multiple execution units 54 are controlled by way of a multiple seven-stage pipeline. These stages are as follows:
- F Fetch:: This stage generates the instruction address and reads the instruction from the instruction cache or memory.
- PD0 Predecode stage 0:: This stage determines the length and starting position of up to three fetched instructions.
- PD1 Predecode stage 1:: This stage extracts the instruction bytes and recodes them into fixed length format for decode.
- DC Decode:: This stage translates the instructions into atomic operations (AOps).
- SC Schedule:: This stage assigns up to four AOps to the appropriate execution units.
- OP Operand:: This stage retrieves the register operands indicated by the AOps.
- EX Execute:: This stage runs the execution units according to the AOps and the retrieved operands.
- WB Write-back :: This stage stores the results of the execution in registers or in memory.

Referring back to Figure 1, the pipeline stages noted above are performed by various functional blocks within microprocessor 10. Fetch unit 26 generates instruction addresses from the instruction pointer, by way of micro instruction translation lookaside buffer (µITLB) 22, which translates the logical instruction address to a physical address for application to level 1 instruction cache 16ᵢ. Instruction cache 16ᵢ produces a stream of instruction data to fetch unit 26, which in turn provides the instruction code to the predecode stages in the desired sequence. Speculative execution is primarily controlled by fetch unit 26.

Predecoding of the instructions is broken into two parts in microprocessor 10, namely predecode 0 stage 28 and predecode 1 stage 32. These two stages operate as separate pipeline stages, and together operate to locate up to three instructions and apply the same to decoder 34. As such, the predecode stage of the pipeline in microprocessor 10 is three instructions wide. Predecode 0 unit 28, as noted above, determines the size and position of as many as three instructions (which can be variable length), and as such consists of three instruction recognizers; predecode 1 unit 32 recodes the multi-byte instructions into a fixed-length format, to facilitate decoding.

Decode unit 34, in this example, contains four instruction decoders, each capable of receiving a fixed length instruction from predecode 1 unit 32 and producing from one to three atomic operations (AOps); AOps are substantially equivalent to RISC instructions. Three of the four decoders operate in parallel, placing up to nine AOps into the decode queue at the output of decode unit 34 to await scheduling; the fourth decoder is reserved for special cases. Scheduler 36 reads up to four AOps from the decode queue at the output of decode unit 34, and assigns these AOps to the appropriate execution units 54. In addition, the operand unit 44 receives and prepares the operands for execution. As indicated in Figure 1, operand unit 44 receives an input from microcontroller 48 and also from microcode ROM 46, via multiplexer 45, and fetches register operands for use in the execution of the instructions. In addition, according to this example, operand unit 44 performs operand forwarding to send results to registers that are ready to be stored. Address generation for AOps of the load and store type may be done by operand unit 44. Alternately, the load/store units 40 may be used to perform the address generation for load and store AOps.

Microcontroller 48, in combination with microcode ROM 46, control ALUs 42 and load/store units 40 in the execution of microcode entry AOps, which are generally the last AOps to execute in a cycle. In this example, microcontroller 48 sequences through microinstructions stored in microcode ROM 46 to effect this control for those microcoded microinstructions. Examples of microcoded microinstructions include, for microprocessor 10, complex or rarely-used instructions, instructions that modify segment or control registers, handling of exceptions and interrupts, and multi-cycle instructions (such as REP instructions, and instructions that PUSH and POP all registers).

Microprocessor 10 also includes circuitry 24 for controlling the operation of JTAG scan testing and certain built-in self-test functions to ensure the validity of the operation of microprocessor 10 upon completion of manufacturing, resets and other events.

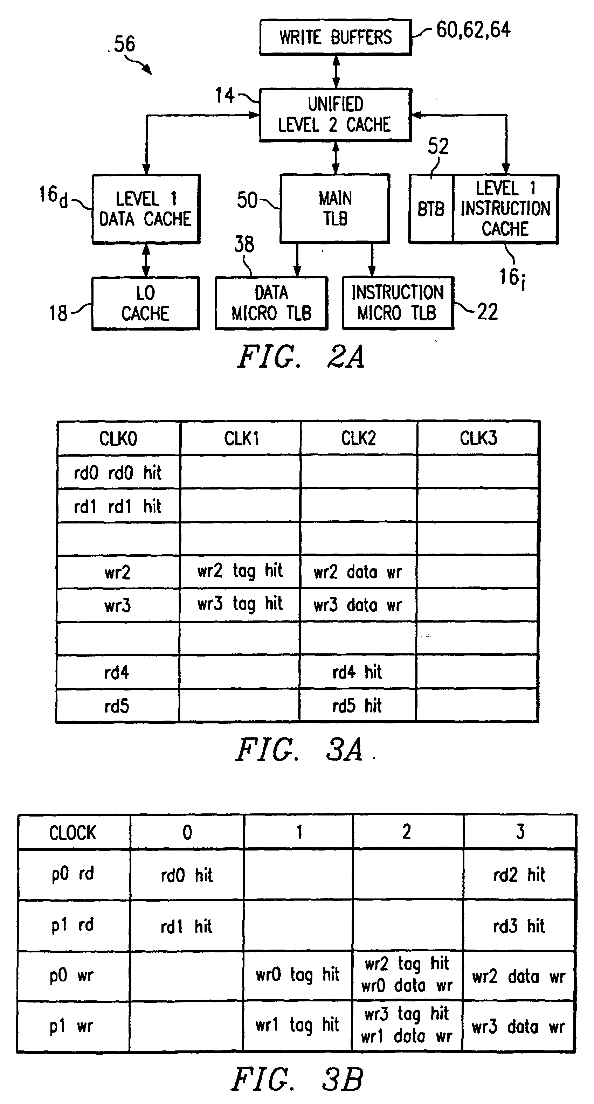

Figure 1 illustrates a processor utilizing an innovative multi-level memory hierarchy. The multi-level hierarchy can be architected to optimize performance and power under the constraints of available chip area. Referring to Figure 2, the memory hierarchy 56 preferably consists of caches 14, 16, 18, write buffers 60, 62, 64, translation lookaside buffers (TLBs) 50, 22, 38, and a branch target buffer (BTB) 52. The external behavior of the memory hierarchy 56 can be constructed to interface with various external systems. For example, the memory hierarchy 56 can provide the same external behavior as the Pentium™ processor.

In one embodiment of the present invention, there are preferably four cache modules 14, 16ᵢ, 16_{d}, 18 . These will be referred to as L0D, L1D, L1I and L2. Preferably, there are separate data 18, 16_{d} and instruction 16ᵢ caches at the lower levels (data : L0D & L1D, instruction: L1I) in order to provide high fetch bandwidth as well as data access bandwidth without conflicts between the two types of accesses. The top level cache 14 (L2) may be used to hold both data and instruction lines in order to maximize the on-chip cache hit rates, hence minimize power consumption on the pins and enhance average memory access time. While other methods of addressing may be used, if all the caches are physically addressed coherence problems associated with virtual addressing due to aliasing are avoided.

The following paragraphs describe one embodiment for implementation of the four cache modules. This description includes information such as total size, line size, access time and associativity. It should be noted that these are exemplary values only. The present invention anticipates that these values can be varied in alternate embodiments.

In one embodiment, the L0D cache 18 has the fastest access time, generally about one-third of a processor cycle, and is the closest to the load/store units 40 as shown in Figure 1. The L0D cache 18 stores data lines (or blocks), and its total size is preferably 1k bytes. The L0D lines are preferably 16 bytes each and arranged in a 4-way set associative organization. In one embodiment, L0D 18 is a superscalar cache with single cycle read/write (r/w) capability. L0D 18 is therefore capable of reading/writing 1 to 4 bytes within a 16 byte aligned line in a single clock cycle. A 1 byte read/write takes 1 clock. If the 2 to 4 byte read/write is 16 bytes misaligned it takes 2 clocks.

Back to back r/w operations every clock are possible in L0D 18. The clock diagram in Figure 3 shows the sequencing of operations, showing that 4 reads and 2 writes (a total of 6 operations) can be done in 3 clocks on the same or different addresses. Note that rd4 and rd5 can be on the same address as wr2 and wr3. Therefore, a write and a read can be performed on the same location in Clk2 such that the written data is available on the read port.

The L1D cache 16_{d} is the next level of data cache which serves the misses from L0D 18. L1D 16_{d} is preferably 2-way set associative with 32 byte lines and a total size of 8 K bytes. In this embodiment, the L1D cache 16_{d} is 2-way set associative so that it can be implemented using the same RAM arrays as the L1I 16ᵢ. The L1D cache 16_{d} is not inclusive of the L0D cache 18, so there may be lines that are present in L0D 18, but not in L1D 16_{d}. The L1D cache 16_{d} access time is preferably one processor cycle.

The instruction cache 16ᵢ, L1I, is preferably 8K bytes in size, has 32 byte lines and is 2-way set associative. L1I 16ᵢ is preferably 2-way set associative, if using a x86 architecture, because the maximum set size that can be addressed in the x86 architecture before linear address to physical address translation is 4 K bytes. The address bits within 4 K byte boundaries in both the linear and physical address are identical. Therefore, by limiting the cache set addressability to 4K bytes, accesses to L1I 16ᵢ can be overlapped with address translation. Access time of the L1I cache 16ᵢ is one processor cycle.

The L2 cache 14 is the combined data and instruction cache. Both L1D 16_{d} and L1I 16ᵢ misses are served by the L2 cache 14. The L2 cache 14 is preferably 64K bytes, 4-way set associative and has superlines of 64 bytes. Each L2 super-line consists of two 32 byte lines. If consistency with the requirements of the Pentium™ processor is desired, external memory coherence must be maintained at the 32 byte granularity. The access time of the L2 cache 14 is three cycles, one for tag lookup and two more for data read and writes. The L2 cache 14 access time can be decreased to two cycles by doing simultaneous tag and data reads. By doing tag lookup first, the exact way in which the data resides can be determined. Therefore, only that portion of the data ram that contains the data needs to be powered up. If parallel lookup is done, all the ways, 4 in this example, of the data ram must be read.

The L2 cache 14 is the functional interface between the rest of the memory hierarchy and the external memory, and along with the BIU 12, is responsible for moving data into and out of the memory hierarchy and maintaining coherence with the external system. The L2 cache 14 also maintains coherence among the other cache modules in the memory hierarchy.

In a multilevel cache system, a system is required to maintain coherency between the caches and also with external memory. Coherency is also necessary in multiprocessor systems accessing the same memory. The term "dirty" will be used to indicate that the data in question may be different with respect to higher levels of cache. The term modified will be used to indicate that the data may be different with respect to external memory. Protocols for maintaining cache coherency will be discussed further below.

In one embodiment, the L0D 18, L1D 16_{d}, and L2 14 caches keep a dirty bit for every eight bytes of data. In another embodiment, L0D 18 and L1D 16_{d} keep a dirty bit for every 16 bytes of data and no dirty bits are maintained by L2 14. The dirty bits are used to reduce the number chunks of data (8 or 16 byte chunks in the embodiments described) to be written in the next higher level cache or in the main memory 5 to only those that have been modified (the corresponding dirty bit is set). The selective writes save power during victim and snoop write-backs in the caches as well the external bus B.

As shown in Figure 2, there are three types of write buffers 60, 62, 64, in the memory hierarchy 56, controlled by the BIU 12. The write-through buffers (WTBs) 60 are used to hold several dword worth of write-through data from the caches to the external memory 5. The replacement write-back buffer (RWB) 62 is preferably a 64 byte-wide buffer used to hold the victim data being replaced from the L2 cache 14 that has to be written back to the external memory 5 when the bus B is available. The snoop write-back buffer (SWB) 64 is preferably a 32 byte-wide buffer used to hold a 32-byte sub-line from L2 cache 14 being written back to the external memory 5 due to an external snoop request.

In one embodiment, the caches 14, 16, 18, the main TLB 50 and the BTB 52 are organized as set associative caches. Preferably, the main TLB 50, the BTB 52, L2 cache 14, and L0D cache 18 are organized as 4-way set associative, and the L1D 16_{d} and L1I 16ᵢ caches are organized as 2-way set associative. The µDTLB 38 and the µITLB 22 are preferably fully associative. Each unit has a number of sets, and each set has a number of lines equal to the number of ways.

The memory hierarchy 56 preferably has three TLB's, the main TLB (TLB) 50, the micro data TLB (µDTLB) 38 and the micro instruction TLB(µITLB) 22. The main TLB 50 preferably contains 128 entries for 4K-page translations and 4 separate entries for 4M-page translations. The 128 4K entries are preferably organized in a 4-way set-associative manner and the 4M-pages are organized as fully associative.

The µDTLB 38 preferably contains 8 entries in a fully associative organization for fast page translation during data accesses to L0D 18. It contains only 4K pages. The 4M pages are stored as synthesized 4K pages. The µDTLB 38 is preferably dual ported for reads corresponding to two load/store units 40 in the processor 10 and has one write port. The memory address generation, linear to physical address translation using the µDTLB 38 (when paging is enabled), and the L0D 18 access are all accomplished during one processor cycle. If the translation request misses in the µDTLB 38, the data access is stalled and the translation request is passed to the main TLB 50.

The µITLB 22 is used for fast page translations for instruction accesses, and is preferably fully associative, and has 4 entries. The 4M pages are stored as synthesized 4K pages. The µlTLB 22 is accessed at the same time as L1I 16ᵢ (when paging is enabled), and the L1I tag comparisons are made only after the page translation has been accomplished. If the translation request is a miss in the µlTLB 22, L1I 16ᵢ is stalled and the translation request is passed to the main TLB 50. The misses from the µDTLB 38 and the µITLB 22 are serviced by the main TLB 50. The main TLB 50 has state machines to walk through the translation tables, namely the page directory entries (pdes), and the page table entries (ptes) in the main memory 5. However, the TLB 50 requests are passed through the L2 cache 14, so that several pdes and ptes are read at a time and stored in the L2 cache 14. For further TLB 50 misses to those entries, the entries are obtained from the L2 cache 14 instead of the main memory 5.

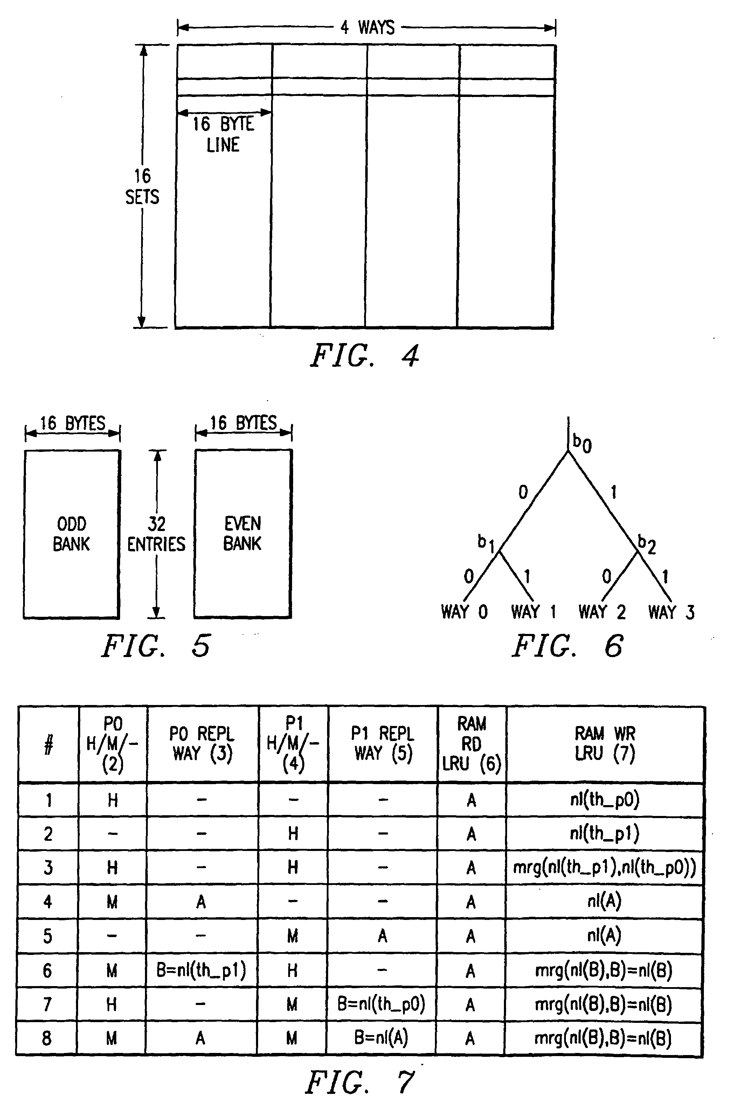

Figure 4 shows, as an example, the logical layout of the L0D cache 18 data ram. In this example, the cache is 4 way set associative with 16 sets and 16 byte lines. Figure 5 provides an example of the physical layout of the data ram shown in Figure 4. The physical ram comprises an odd and an even bank of memory. Each bank has two adjacent entries containing the two odd/even entries of a logical 16 byte line. The 16 byte output of each bank corresponds to 4 bytes for each way (of 4 ways).

The structure shown in Figure 5 can be used to provide the capability of reading/writing any 1 to 4 contiguous bytes within a 16 byte aligned line in a single clock cycle and a 16 byte misaligned line in 2 clocks. While the description below describes this capability using an exemplary L0D cache 18 as described above and shown in Figures 4 and 5, the technique described below could be used with any memory where reading or writing of a subset of an aligned or misaligned line was desired. Note all address/data semantics are in 'little endian' format, i.e., right to left in increasing order

In one embodiment, a 32 bit address is used to access L0D 18. The address is preferably divided as follows:

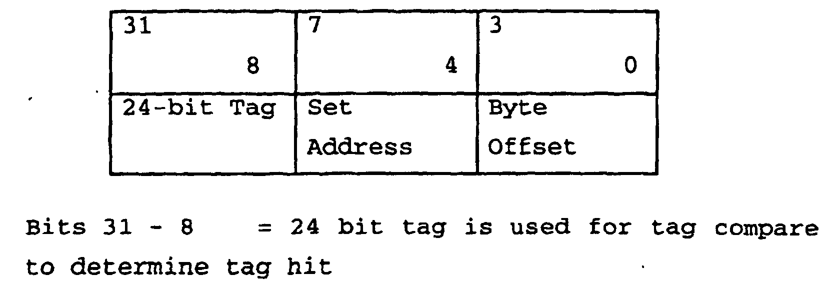

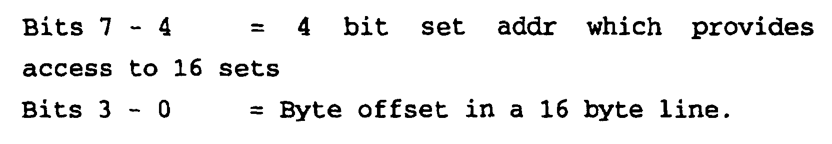

A single clock cycle is used to extract any 1 to 4 bytes within a 16 byte aligned line. The mechanism of doing so is as follows:

A 16 byte line can be comprised as below of 4 byte odd/even banks:

| | | | |
|---|---|---|---|
| 15----12 | 11----8 | 7----4 | 3---- 0 |
| odd1 | even1 | odd0 | even 0 |

To read any 2 to 4 bytes within a 16 byte aligned line one odd and one even bank needs to be accessed. From this pair of an odd/even bank any byte aligned 2 to 4 bytes can be extracted by aligning and shifting the odd/even pair. Therefore, an odd/even pair of 4 bytes each are chosen and put together as even-odd or odd-even to form an 8 byte segment (which is 4 byte aligned). Next the segment is shifted down by 1 to 3 bytes to get a byte aligned 1 to 4 byte result.

Address bits 3-0 carry the information regarding which bytes need to be extracted from a 16 byte aligned line. Address bits 1-0 control the byte offset within an odd/even pair. The determination of which odd/even pair to select and in which order to place them (even-odd or odd-even) is done as shown below:

| A<3> | A<2> | Even Bank Sel =A<3>xorA<2> | Odd Bank Sel =A<3> | Even as HighHalf =A<2> | Odd as HighHalf =(not A<2>) |
|---|---|---|---|---|---|
| 0 | 0 | 0 | 0 | 0 | 1 |
| 0 | 1 | 1 | 0 | 1 | 0 |
| 1 | 0 | 1 | 1 | 0 | 1 |
| 1 | 1 | 0 | 1 | 1 | 0 |

If 'odd bank select' is high odd1 is selected, if it is low odd0 is selected. When 'even bank select' is high even1 is selected and when it is low even0 is selected. When 'even as HighHalf' is high, an 8 byte chunk is formed with the even bytes as the high 4 bytes of 8 bytes formed from the selected odd and even banks. When 'odd as HighHalf' is high the result is the inverse of 'even as High Half' described above.

Below is an example to demonstrate the above scheme. Assume the 32 bit address in hex is 0x........5. 4 bytes, starting at that address, are to be accessed. Therefore, from the below line we want to access bytes 8-5.

| | | | |
|---|---|---|---|
| 15----12 | 11----8 | 7----4 | 3---- 0 |
| odd1 | even1 | odd0 | even0 |
| 0f 0e 0d 0c | 0b 0a 09 08 | 07 06 05 04 | 03 02 01 00 (in hex) |

The 3-0 address bits are as follows:

| | | | |
|---|---|---|---|
| A<3> | A<2> | A<1> | A<0> |
| 0 | 1 | 0 | 1 |

Therefore:
Even Bank Sel= A<3> xor A2> = 0
xor 1= 1
Odd Bank Sel= A<3>= 0
Even as HighHalf= A<2>= 1

As a result, odd0 and even1 are selected and placed together as even1-odd0. Hence, the 8 byte chunk extracted from the 16 byte line is:

| | |
|---|---|
| 11--------8 | 7--------4 |
| even1 | odd0 |
| 0b 0a 09 08 | 07 06 05 04 |

Next, A<1-0> are used to determine the right shift index to extract byte aligned data. In this example, A<1-0> = 01. Therefore, a shift right by 1 byte will provide the expected byte aligned data. Shifting 0b0a090807060504 right by 1 byte results in 0b0a0908070605, providing in the rightmost 4 bytes as the expected data.

For a 16 byte misaligned access two clocks are required to extract any 2 to 4 bytes of data. The mechanism uses a combination of the above scheme and address arithmetic to extract the data in 2 clock cycles. In a 16 byte misaligned access the requested data is spread in two adjacent 16 byte aligned lines. For example, if 4 bytes at address 0x.......0e are needed, they can be extracted as follows:

| Upper 16 Bytes | | | | Lower 16 Bytes | | | |
|---|---|---|---|---|---|---|---|
| 15----12 | 11----8 | 7----4 | 3----0 | 15----12 | 11----8 | 7----4 | 3----0 |
| odd1 | even1 | odd0 | even0 | odd1 | even1 | odd0 | even0 |
| 1f1e1d1c | 1b1a1918 | 17161514 | 13121110 | 0f0e0d0c | 0b0a0908 | 07060504 | 03020100 |

The first 1 to 3 bytes are extracted from the lower 16 byte line using the aligned scheme as described above. Next 16 (0x10 hex) is added to the address and this computation results in the address pointing to the next higher 16 byte line. Then, the above scheme is used to extract the remaining bytes from the higher 16 byte line. The above steps yield two 4 byte aligned chunks of data. Some bytes from the first segment and some bytes from the second segment are selected to form the contiguous expected data.

For example, if 4 bytes at address 0x......0e are needed, then bytes 14 and 15 of the lower 16 bytes and bytes 0 and 1 of the upper 16 bytes are expected for a result of 11100f0e.

First, the first half of the desired data is extracted from set 0. The set address is at address bits A<7-4> of address 0x.....0e.
A<3-0> = 1110
Even Bank Sel= A<3> xor A<2>= 1
xor 1= 0
Odd Bank Sel= A<3>= 1
Evn as HighHalf= A<2>= 1

Odd1 and even0 are selected and placed together as even0-odd1. Hence, the 8 byte chunk have extracted from the 16 byte line is:

| | |
|---|---|
| 3--------0 | 15--------12 |
| even0 | odd1 |
| 13 12 11 10 | 0f 0e 0d 0c |

Next, a shift right by 2 bytes is done, resulting in the 4 bytes 01000f0e from the lower 16 bytes. Note the wraparound of bytes 0 and 1 of the lower 16 bytes.

To obtain the relevant portion of the upper 16 bytes, 16 (0x10) is added to the address, resulting in a new address of 0x.....1e. This address points to set 1 because A<7-4>=0x1. The aligned odd/even selection and byte rotation are performed are then performed for the lower 16 bytes.
a<3=0> = 1110
Even Bank Sel= A<3> xor A<2>= 1
xor 1= 0
Odd Bank Sel= A<3>=1
Even as HighHalf= A<2>= 1

Therefore, odd1 and even0 are selected and placed together as even0-odd 1. Hence, the 8 byte chunk extracted from the 16 byte line is:

| | |
|---|---|
| 3--------0 | 15--------12 |
| even0 | odd1 |
| 13 12 11 10 | 1f 1e 1d 1c |

Next, a shift right by 2 bytes is performed, resulting in the 4 bytes of 10fe. Again, note the wraparound of bytes 14 and 15 of the upper 16 byte line. The relevant bytes from the two computations are then muxed.

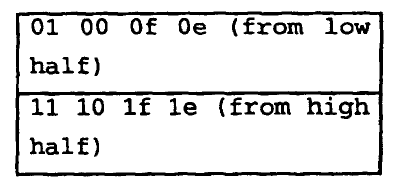

The '0f0e' bytes from low half and '1110' bytes from high half are selected, resulting in the 4 bytes which are spread across a 16 byte misaligned boundary. Using the method described above these bytes can be extracted in 2 clocks.

A microprocessor can generally work either with or without enabling the on-chip caches. In a Pentium™ processor, the memory can be barred from caching any data or instruction line by using the CR0.CD bit or the PCD bit in the page translation tables according to the Pentium™ processor User's Manual, Volume I. When cache is disabled, all the memory read and writes are performed directly on the external main memory using the bus. However, if cache is disabled after some data is stored in cache then there will be cache hits even with cache disabled. The various cases are described in the Pentium™ processor User's Manual, Volume I. In the Pentium ™, the cacheability of individual lines is also controlled by the external pin KEN#. Refer to the Pentium™ processor User's Manual, Volume I for a description of these features.

The memory hierarchy 56 can work either in a write-through (WT) or write-back (WB) mode. In the Pentium™, the WB/WT modes are controlled by the WB/WT# pin on the bus, the CR0.NW bit and the PWT bit of page translation tables (see Pentium™ processor User's Manual, Volume I). In the write-through mode, every write access in the processor is posted on the bus B. In the write-back mode, the cache line writes usually appear on the bus B only when a line is replaced from the internal L2 cache 14, or a line is required by one processor and another processor has a modified copy of the line.

In one embodiment, when the internal and external conditions allow caching, the various read/write operations preferably proceed as follows in the memory hierarchy 56.

Instruction Reads: During instruction fetches, the fetch unit requests a 16-byte quantity of memory containing instructions from the L1I cache 16ᵢ. If those 16-bytes are present in L1I 16ᵢ (hit in L1I), L1I 16ᵢ immediately supplies the 16-byte quantity to the fetch unit 26. If it is a miss, L1I 16ᵢ posts the request to the L2 cache 14. If the request is a hit in L2 14, a 32-byte line is supplied to L1I 16ᵢ. L1I 16ᵢ stores this line and supplies the required 16-byte portion to the fetch unit 26. If the read request misses in L2 14, L2 14 requests the BIU 12 to get the line (or the super-line containing that line, depending on whether the other line in that super-line is present or not) from the main memory 5. The BIU 12 fetches the line(s) in 8-byte chunks and passes them to the L2 14/L1I 16i/Fetch unit 26 as and when they are ready. The Fetch unit 26 consumes the 8-byte portions as and when they become available. When the first 32-byte of data (the line requested by L1I 16i) is available, L1I 16ᵢ stores the line and is ready to serve another read request from the fetch unit 26. After the L2 cache 14 gets the line (or superline) from the external memory 5, it stores the line (or superline) and is ready to serve another request.

Data Reads: During data fetches, the load/store units 40 (L/S0 and L/S1) submit 1/2/4 byte read requests to the L0D cache 18. Each L/S unit 40 has a dedicated read port to the L0D cache 18. Therefore, multiple read requests can be handled by L0D 18 in the same cycle. If the read request is a hit in L0D 18, data is supplied immediately to the corresponding L/S unit 40. If the request is a miss, L0D 18 sends the request to L1D 16_{d}. (If both L/S units 40 have a read request, and both miss, then the request from L/S0 40₀ is served first). If there is a hit in L1D 16_{d}, L1D 16_{d} returns a 16-byte line to L0D 18. L0D 18 stores the 16-byte line and supplies to the requesting L/S unit 40. If it is a miss in L1D 16_{d}, the read request is sent to the L2 cache 14 and the L2 cache 14 handles data read access similarly to the way it handles instruction reads. Note that, if a read request is a miss at one of the caches, that cache is blocked until the line is supplied by the next higher level cache or the main memory 5.

Data Writes: During data stores, the L/S units 40 submit 1/2/4 byte write requests to the L0D 18. If the line is present in L0D 18, the write is performed there. In addition, if the line is not already modified in L0D 18, the write request is passed also to the L1D cache 16_{d}. If the line is present in L1D 16_{d}, the write is performed in L1D 16_{d}. In addition, if the line is not already modified in L1D 16_{d}, the write request is also transmitted to the L2 cache 14. Irrespective of the state of the line in the L2 cache 14, the write is preferably never performed in L2 14. This is done to avoid powering on the L2 cache 14 array during write accesses. However, the L2 cache 14 performs the required state changes for the line if it is a hit. In addition, if it is a hit, and the write needs to be written to the main memory 5, the write request is passed to the BIU 12 (this is called write-through). If the line is a miss in L0D 18, the write request is passed to L1D 16_{d}, after which L0D 18 is free to serve other requests from the L/S units 40 (L0D 18 is non-blocking for writes). If the line is a miss at L1D 16_{d}, the write request is passed to L2 14. But, in one embodiment, L1D 16_{d} waits until L2 14 lets it go, before it can serve another request from L0D 18. If the write request is a miss in L2 14, it is passed to the BIU 12. The BIU 12 stores the write information in one of the write buffers 60, 62, 64, and writes it on the bus B when the bus B becomes available.

Write-allocation: If a cache line is filled when a cache miss occurs that line is said to be allocated. In one embodiment, only parts of the memory hierarchy allocate a line during a write miss. L0D 18 preferably does not allocate the line on a write miss so it will be non-blocking on writes. L1D 16_{d} preferably allocates the line on a write miss only if it is a hit in L2 14. If the access is a miss in L2 14 as well, then the line is preferably not allocated in L1D 16_{d}, and L1D 16_{d} is freed to serve other requests. Generally, the line is preferably allocated in the L2 cache 14 on a write miss.

Victim replacements and write-backs: When there is a miss in the L0D 16_{d}, L1D 18, or the L2 14 caches, and there are no empty (invalid) lines in the related set in the corresponding cache, then one of the lines in that set is selected to be replaced by the new line to be fetched from the next higher level cache or memory. The line to be replaced is called the victim. If the victim is dirty in the corresponding cache, then it has to be written back in the next level of cache or memory, before the new line can be written in it's place. If the victim is not dirty in that cache, it may simply be replaced by the new line being fetched.

Write bypassing around the L2 cache 14: Data writes from the load/store units 40 are preferably never performed in the L2 cache 14. Only the copies in L0D 18/L1D 16_{d} are modified, and/or the accesses are performed in the main memory 5. Therefore, it is possible that the copy of a line in the L2 cache 14 has stale data, where as the main memory 5 and L0D 18 (and/or L1D 16_{d}) have the same recent data, and the line is not in the modified state in the memory hierarchy. This data inconsistency, however, will not result in a wrong operation. When the line gets replaced from L0D 18, it is written back in L1D 16_{d}, and similarly, when it is replaced from L1D 16_{d}, it is written back to L2 14, so the modified data is preserved in the memory hierarchy and is used by the L/S 40 or fetch 26 units when required.

TLB reads: During TLB 50 misses, or when the 'dirty' bit in a TLB entry needs to be set, the main TLB 50 passes the un-locked read request to L2 14. The L2 cache 14 supplies the page table entry or the page directory entry to the TLB 50 immediately if it is a hit. In case of a miss, the L2 cache 14 fetches the entry from the main memory 5, stores the line (or super-line) and supplies the entry to the TLB 50. Note: the write requests from the TLB 50 are preferably locked, and locked accesses are non-cacheable. During a locked access control of the local bus is not passed to another bus controller until the locked request is complete.

Data access hazards at L0D 18: It is possible that both the load/store units 40 need data accesses in the same cycle. If both the requests are to the same address (same 16-byte line), and at least one of them is a write access, then it is a hazard condition and L0D cache 18 resolves the hazard before proceeding with the data accesses.

When a new line is to be fetched to a L/S unit 40, if none of the lines in a set in a cache is empty (i.e., every line in the set contains valid data), then one of the current lines have to be replaced before the new line can be stored in that set. The line to be replaced is determined by a replacement algorithm, which may be different for the different cache units. In one embodiment, the L1D 16_{d} and L1I 16ᵢ caches use an LRU (Least Recently Used) algorithm, where as the other units use a pseudo LRU (or tree LRU) algorithm. A pseudo LRU algorithm attempts to record the way which has not been accessed for the longest time without keeping the detailed history often maintained with an LRU algorithm.

In one embodiment, a pseudo or tree LRU for a 4 way set associative cache comprises 3 bits, b0- b2, as shown in Figure 6 . The value of the 3 bits indicate which way to replace next. On each hit or miss, the next LRU is calculated by flipping the 2 bits on the way path and carrying the unused bit. On a miss, the way path is the replaced way. A hit can occur on any way. When a hit occurs, the two way path bits are flipped to get the next LRU. For example, if the value of LRU is 000 (b2, b1, and b0, respectively) and there is a read miss, the next LRU value will be 011 (carry b2, flip b1 and flip b0 because the way path is way 0). If the next action is a hit on way 2, the next LRU value will be 110 (flip b2, carry b1, and flip b0 because the way path is way 2).

In a superscalar microprocessor architecture where multiple execution pipelines are accessing the same cache in parallel, besides cache coherency, it is necessary to maintain replacement scheme consistency. The replacement scheme in one example is LRU. In a non-superscalar design, a malfunctioning LRU scheme does not cause any functional problem besides performance impact. However, in a superscalar design functional problems can occur if the LRU dependencies between the two cache transactions in the same cycle are not correctly handled.

When the two pipelines (pipes) are accessing different sets of the L0 cache 18 in the same cycle, there is no interaction between them and they can proceed independently. However, problems occur when the two pipes access the same set in the cache in the same cycle. The conventional LRU replacement scheme which disregards the interaction between the two pipes fails to work.

Figure 7 shows the hit/miss (H/M) interaction between the two pipes P0, P1 (also signified as p0, p1) of a superscalar architecture when both the pipes are accessing the same set in the L0 cache 18. It is assumed that the transaction on P0 is sequentially earlier in time over that in P1 in the same cycle. Each row in Figure 7 shows a unique combination of transactions on P0 and P1. The first column in is an arbitrary number assigned to each transaction combination. The second column indicates whether the transaction on P0 is a hit or a miss. The fourth column indicated whether the transaction on P1 is a hit or a miss. Note that the hit or miss indicated in columns 2 and 4 can be either reads or writes. The third column indicates the replacement way for P0 in the case of a read or write miss. The fifth column indicates the replacement way for P1 in the case of a read or a write miss. Column six is the LRU read from the cache rams, and column seven is the LRU written back to the cache rams based on the transactions in the two pipes. The LRU computations below use a pseudo LRU replacement scheme. However, the concept of replacement scheme consistency for a cache serving multiple execution pipelines described below could be implemented using a variety of replacement schemes.

In Figure 7:
nl(A) => next LRU based on current LRU value A
nl(B) => next LRU based on current LRU value B
mrg(B,A) => merged LRU where LRU value B is prioritized over LRU value A
mrg(nl(B),B) => merged LRU where NEXT LRU B is prioritized over LRU value B
th_p0/1 => tag hit p0/1
nl(th_p0/1) => next LRU based on the currently hit way

The functions below detail the computation of next LRU and merged LRU based on the most recently used way.

The NXT_LRU (next LRU) function computes the LRU which needs to be written back to the LRU ram based on the current single pipe operation. This function does not try to determine the final LRU value based on the combined activities on two pipes. The function takes in three arguments:
mru_way => is the most recently used way which is the hit way in case of a hit and the allocation way for a miss. Note that in a 4-way set -associative cache this value is 4-bits where each bit represents a way.
vhit => is a 4-bit value in a 4-way set associative cache, with each bit corresponding to a way. The bit is set when the corresponding way has valid data.
LRU => is the 3-bit LRU read out of the LRU ram.
The NXT_LRU function preferably computes the next LRU value to point away from the most recently used way based on the pseudo LRU algorithm. However, if there is any way in the set which is invalid (determined by vhit), the next LRU points to that way. Therefore, on the next allocation the invalid way gets used rather than replacing a valid way.

The NXT_LRU_WBE (next LRU write bit enables) determine which two out of three bits get updated on an LRU update. This is based on the fact that in a pseudo LRU algorithm, only two out of three bits need to be updated.

The MERGE_LRU (merge LRU) function computes the LRU value based on two input LRU values, where one input LRU value impacts two out of three bits of the output and the remaining output bit is derived from the other input LRU. This function is used to merge two next LRU values from two pipes when they are operating on the same set and determine the final LRU value to be written back.

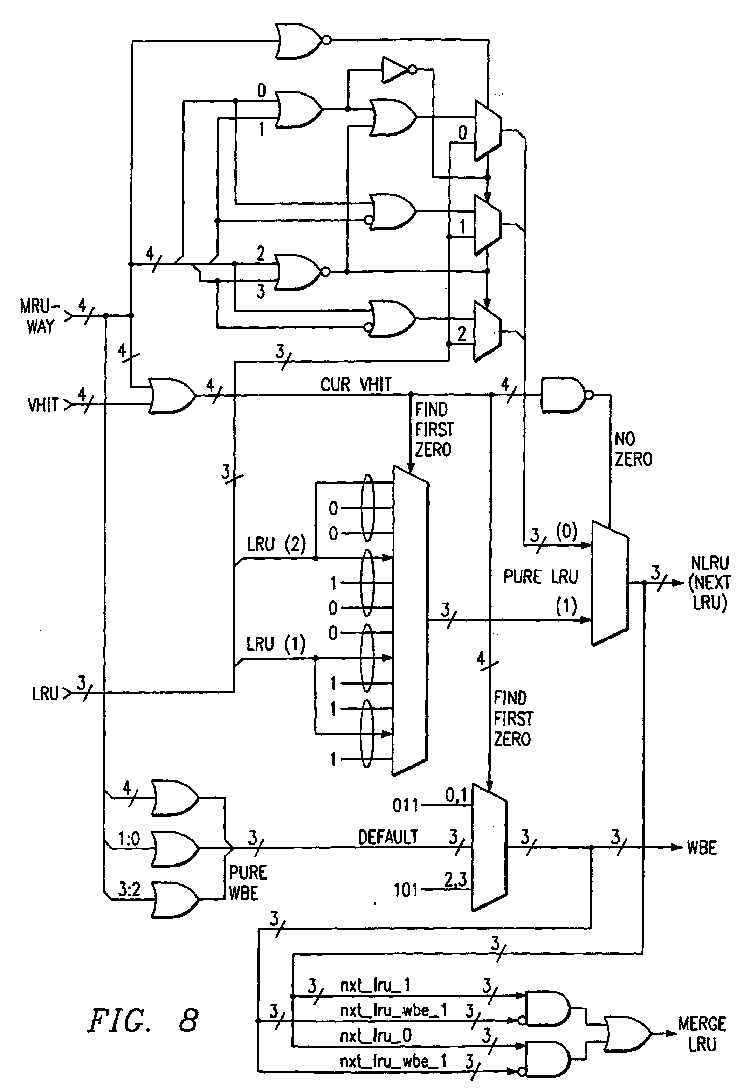

In Figure 8, improved circuitry computes next LRU and merged LRU based on the mru_way, vhit, and LRU.

Based on the above functions, Figure 7 can be analyzed as follows:
Row 1 and 2 of Figure 7 illustrate the case for LRU update when there is just a read or a write hit on either P0 or P1. The LRU read from the LRU ram is A, and the most recently used way is the hit way. The next LRU is computed based on these parameters from a single pipe activity. So, the two bits changed in the next LRU are determined by the hit way and the unchanged bit is carried from the current LRU value A. However, in this and all the illustrations below, if there are one or more invalid ways in the set the next LRU is the next available invalid way.
Row 3 of Figure 7 addresses the case when there is a read or a write hit on both pipes. A simple way to think about this case is as if the activity of two parallel hits happened in sequence on a single pipe where P1 activity is later in time over P0 activity. This effect is achieved by the merge LRU function. The changed bits for the next LRU for P0 would be determined by the hit way for P0 and the changed bits for the next LRU for P1 would be determined by the hit way for P1. When these two values are merged into the final LRU the two changed bits from the next LRU for P1 are used and the remaining bit is obtained from the next LRU for P0.
Row 4 and 5 of Figure 7 show the case when there is a read or a write miss on P0 or P1, respectively. On a miss, the LRU read from the ram points to the way selected for allocation/replacement. The next LRU is simply computed to point away from the current LRU.
Row 6 of Figure 7 illustrates the case when there is a miss on P0 and hit on P1. This is a special case where future dependency analysis should be done. Consider the case where current LRU points to way 0, there is a miss on P0, a hit on P1 and P1 is accessing way 0 data. Normally without regard to P1 activity, P0 would allocate in way 0, thereby writing out as victim the current way 0 data and bringing in the desired new data. Later, P1 would try to access previous way 0 data, get a miss and then pull the data back in which just got written out as victim by P0 operation. This inefficiency can be avoided if both the activity of both pipes are taken into consideration before deciding the allocation way. Therefore, the allocation way used by P0 is based on the next LRU computed based on P1 hit as opposed to simply the current LRU read out of the ram. If the allocation way for P0 is determined to be B, the final LRU written back to ram would be the next LRU of B. The value written back is the merge of the next LRU of P1 (next LRU of B) and the next LRU of P0 (B). The result of this merge is the same value as the next LRU of B.
   In Figure 7, row 7 demonstrates the case when there is a hit on P0 and miss on P1. The net effect of these operations would be same as if these two operations happened in sequence. P0 hit results in a next LRU value, for example B, to point away from the P0 hit way. P1 uses this B LRU for determining its allocation way, and the final LRU written back is the next LRU of B (mrg(n1(B), B)).
Row 8 of Figure 7 specifies the case when there is a miss on both P0 and P1. P0 allocates to way A, where A is the value read out of LRU ram. The next LRU of P0 is B which is used for allocation by P1. The final LRU written back is the next LRU of B (mrg (n1(B), B)).

Distinctive features and advantages of this embodiment include: future dependency analysis and utilization (e.g., see row 6 of Figure 7), efficient invalid way recovery and usage, and set match LRU merging. The overriding constraint in the next LRU computation is that whenever there is an invalid way in the set, the LRU points to that way. This advantage recovers the invalid ways for next read/write miss allocations. For example, if both pipes have a miss and there are two or more invalid ways, P0 gets the first invalid way allocated and P1 gets the next invalid way allocated resulting in efficient invalid way recovery and usage. Set match LRU merging is accomplished because both pipe transactions are used to update the LRU in ram, where P1 is prioritized over P0 as shown in function MERGE_LRU.

The memory hierarchy 56 can maintain coherence with the external memory 5 and other caches, both internal and external, in the system using either a write-back or write-through MESI cache coherence protocol identical to that in the Pentium™ processor or any other desired protocol. In one embodiment, the memory hierarchy 56 maintains internal coherence among the various components using the MESI states and a novel two-bit directory scheme managed by the L2 cache 14.

When the external system drives snoop cycles (or inquire cycles) on the bus B, the L2 cache 14 is responsible for taking the required coherence actions with the help of the other caches in the hierarchy. Examples of coherence actions due to external snoops are invalidating a line in the on-chip caches if it is present, and/or supplying the data back if it has been modified in the internal caches.

In one embodiment, coherence with the external system components is maintained at 32 byte granularity. Coherency protocols, such as MESI guarantee coherence between processors in a shared memory multi-processor system. If a MESI protocol is used, a 32 byte line in the memory hierarchy 56 can be in one of the following four states (called the MESI states):
- Modified (M): the copy in the memory hierarchy 56 is the only valid copy in the system. This copy has been modified, and the main memory 5 copy is not consistent with this copy.
- Exclusive (E): the copy in the memory hierarchy 56 is the only copy in the system which may be modified. However, this copy is consistent with the main memory 5 copy.
- Shared (S): the copy in the main memory 5 is consistent with the copy in the memory hierarchy 56 and a copy possibly exists in other caches external to processor 10.
- Invalid (I): the copy of the line in the memory hierarchy 56 does not contain valid data.

The MESI state is maintained by each cache on each line of data it contains. The MESI states are used to control access to data so that only one cache has a writeable copy at any one time, and so that the processor 10 and other devices can locate the most up to date copy of data in a cache or in main memory 5.

When the memory hierarchy 56, starting from completely empty caches, operates in the write-through mode, all the writes are posted on the external bus B immediately, and the line never goes to the E or M states. These states are possible only in the write-back mode.

In one embodiment, a line (32-bytes) in L2 14 or L1D 16_{d} can have all of the four states, M, E, S or I. A line in L0D 18 can have only three states, M, S and I. A line in L1I 16ᵢ can have only two states, S and I. The lines in L1I 16ᵢ preferably do not get modified. However, it is possible that a line is in M state in L2 14, but is in S state in L1I 16ᵢ. In that case, the copy in the data caches (L0D 18/L1D 16_{d} /L2 14) must have the same value as in L1I 16ᵢ.

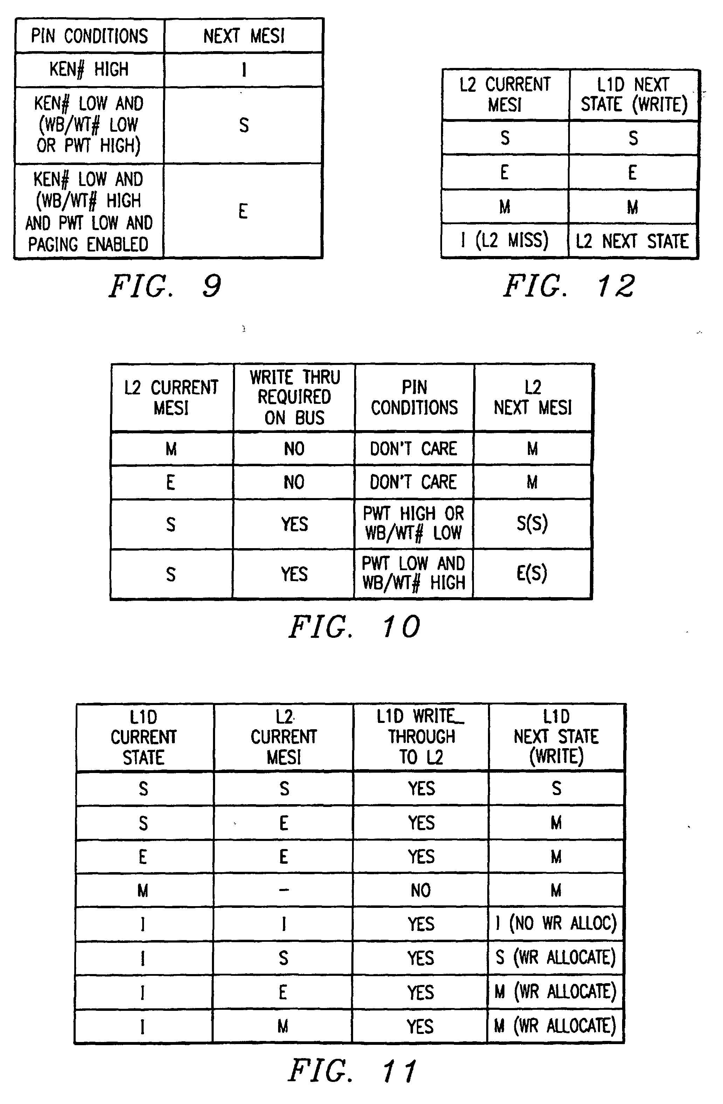

The L2 14 lines are preferably 64 byte wide and consist of two 32 byte sub-lines. Each 32 byte sub-line is associated with a two-bit state. The states in which a sub-line can be in L2 14 are Modified, Exclusive, Shared and Invalid (MESI). The transitions among the various states in L2 14 during line reads and writes using conventional Pentium™ signals are shown in Figures 9 and 10. The state transitions from S to S or S to E in Table 10 do not occur immediately. L2 14 waits until the BIU 12 completes the required write-through and returns the WB/WT# status before changing to the final state. Meanwhile, the intermediate state in those two cases is S and L2 14 is free to serve other internal read/write requests.

Preferably, the lines in L1D 16_{d} are 32 bytes wide and each line is associated with a two-bit state. The states in L1D 16_{d} have the same meaning as in L2 14 . The transitions are shown in Figures 11 and 12.

Preferably, the lines in L1I 16ᵢ are 32 bytes wide each of which has a one-bit state associated with it. The possible states of a line in the I-cache are S and I. The L1I 16ᵢ lines are always loaded in the S state and are invalidated when being replaced in L1I 16ᵢ or when L2 14 asks L1I 16ᵢ to invalidate the line.

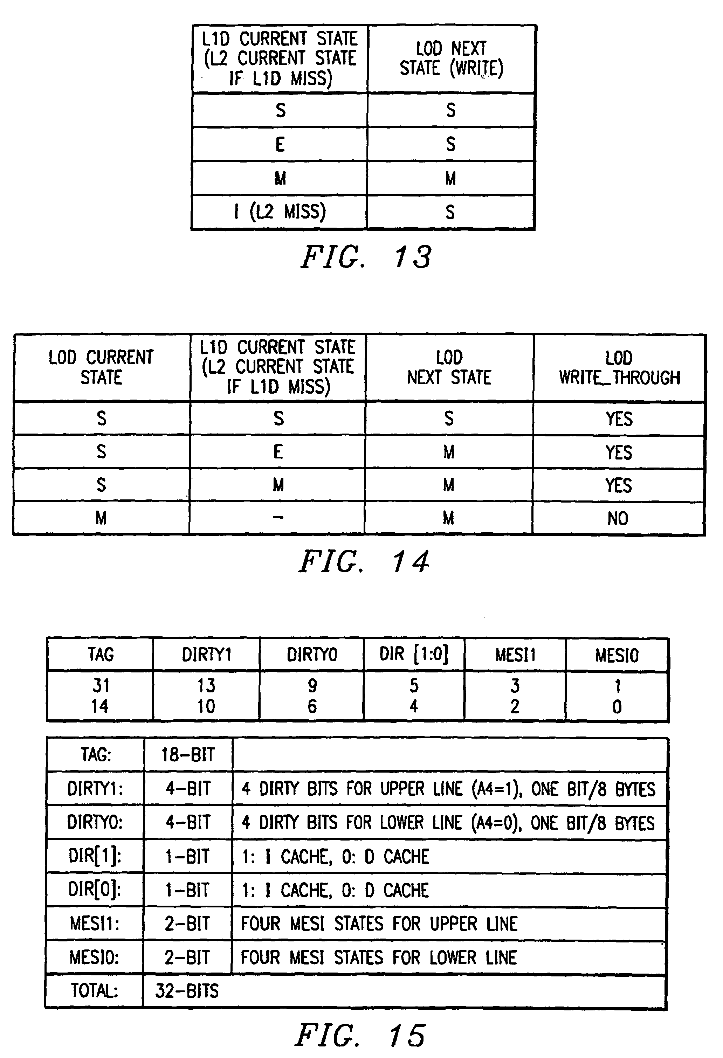

Preferably, the lines in L0D 18 are 16 bytes wide, each having a two-bit state associated with it. In one embodiment, the possible states in L0D 18 are Shared, Modified and Invalid. In another embodiment, L0D 18 also has an E state. The state transitions for L0D 18 with no E state are shown in Figures 13 and 14 for read misses and writes, respectively. Generally, S and E state are similar in L0D 18 because in either state a write through to L1D 16_{d} is done. Therefore, in some embodiments the E state can be removed for L0D 18 to minimize states.

L2 14 does a tag look up on every external snoop request to determine if the line is present in any of the on-chip caches. A snoop or inquire cycle is sent to a processor with an on-chip cache or to a cache controller to determine if a specific address is present in that cache. Internal coherence actions are initiated to the lower level caches only if a line is present in one of the caches. In order to know if a line is present in a lower level cache and the state of the line in the lower level caches, the L2 cache 14 must maintain the inclusion property with respect to the lower level caches. In one embodiment, inclusion in the L2 cache 14 has a special meaning: if a line is present in L1D 16_{d}, L1I 16ᵢ or L0D 18, then the line is also present in L2 14, and if a line is modified in L1D 16_{d} or L0D 18, then the MESI state of the line in L2 14 is also M, even though the data in the L2 14 copy may be different from the Data in L1D 16_{d} or L0D 18 at times.

The L2 cache 14 maintains the above inclusion property by using the following three mechanisms. First, when there is a miss in one of the caches, L1D 16_{d}, L1I 16ᵢ, and L0D 18, and the line is brought into that cache from the main memory 5, the line is also stored in the L2 cache 14. Second, when there is a write request to the L0D 18 /L1D 16_{d} caches, and the line is not in M state there, a write request is made visible to the L2 cache 14, so that it changes the line's state to M. Third, when a line is replaced from the L2 cache 14, any copy in L1D 16_{d}, L1I 16ᵢ, or L0D 18 are invalidated using the internal coherence mechanism and the line is written back to the main memory 5 if it had been modified with respect to external memory 5 in the memory hierarchy 56.

However, the L2 cache 14 is preferably not inclusive of the TLB 50 entries. If the software modifies any of the page directory or page table entries, then it is the responsibility of the software to invalidate the corresponding entries in the TLB 50. In that case the subsequent access for that entry is a miss in the TLB 50 and the correct entries are supplied by the memory hierarchy 56 or the external memory 5.

Moreover, the L1D cache 16_{d} is preferably not inclusive of the entries in L0D 18. When a line is replaced from L1D 16_{d}, it is not invalidated in L0D 18. The combined hit rate of L0D 18/L1D 16_{d} is enhanced by avoiding the inclusion requirement between L1D 16_{d} and L0D 18. However, if there is a hit during an external snoop at L2 14, both L1D 16_{d} and L0D 18 tags are switched on at the same time to determine the state of the line in each of them. In one embodiment , there is a separate snoop tag ram in L0D 18 to minimize interference of snoop on normal load/store operations. Only when there is a snoop hit do normal load/store operations have to be stalled. On a snoop miss there is no interference with normal load/store operations. A separate snoop tag ram can also be used for L1D 16_{d} . However, generally the load/store traffic from L1D 16_{d} to L0D 18 is less than the load/store traffic from the execution units 40 to L0D 18.

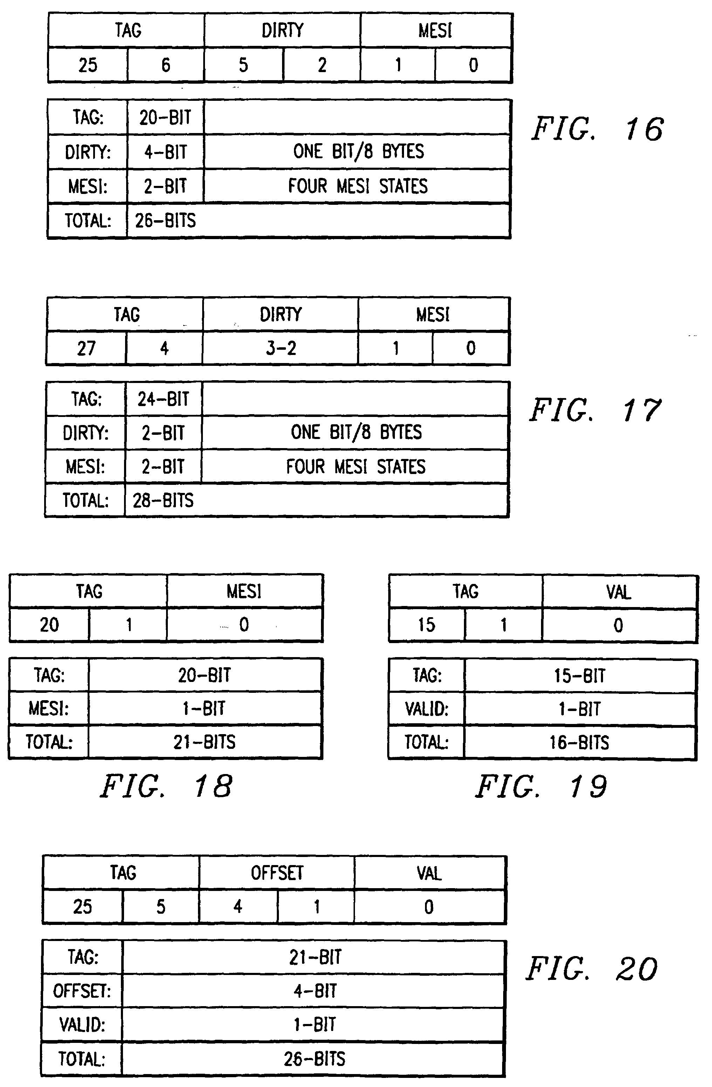

Associated with each of the memory units in the memory hierarchy 56 are tag rams which hold information such as address tags, coherency data, and replacement data. The bit fields for the tag rams of the various units are shown in Figures 15-20.

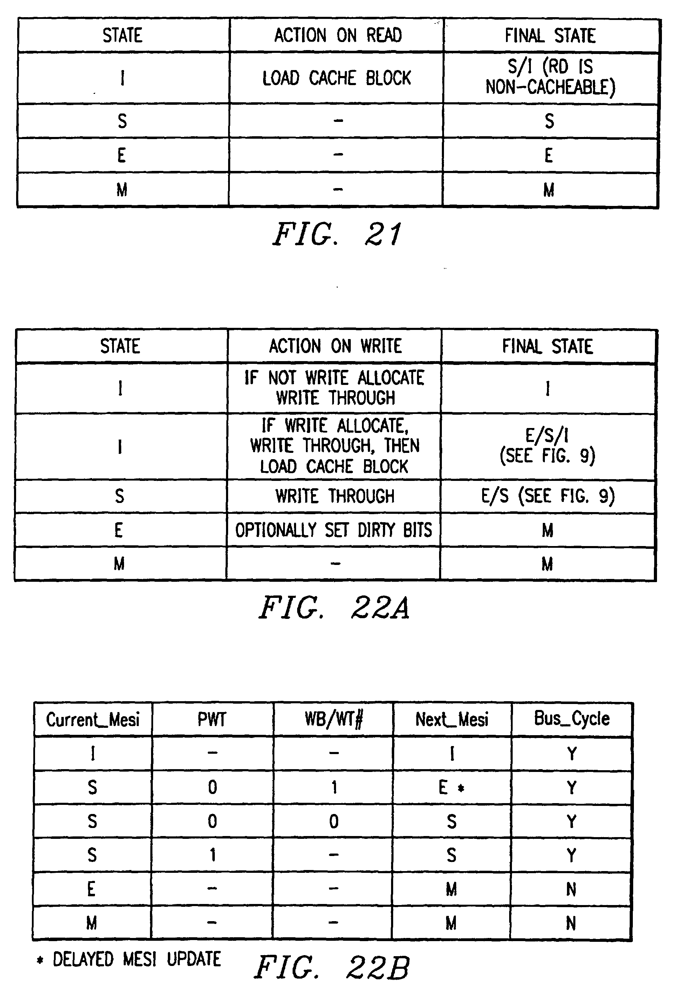

Referring to Figure 21, generally, if a cache block is invalid (not contained in the cache) and a read of data in that block occurs, the cache block is loaded and marked as either shared or exclusive. Further reads which hit the cache block cause no further changes to the MESI state. Reads also cause no MESI state transitions if the cache block is in the M states.

The choice of loading into the shared state rather than the exclusive state is a function of external forces, such as the bus B transaction reading the data, and other inputs from, for example, TLB's 50, 22, 38 and input pins. While the loading into either state is possible, loading into the shared state will primarily be discussed. How later operations work is simply a function of the current state of the cache block, so whether it is shared or exclusive, the functionality is described below.

If a cache block is in the shared state and a write occurs, there is a write-through to the system bus B, which signals all other caches to invalidate their copies, potentially after writing back modified data. Following that, the cache block either stays in the shared state or moves from the shared to the exclusive state depending on input from the external system. The purpose of the write-through to the bus is to make all other holders of the data know that there was change to that block. If a write occurs when the cache block is in the exclusive state, the cache block goes to the modified state, and cache block dirty bits are set. This second write uses a write-back policy instead of write-through. In the modified state, writes cause no further MESI state changes.

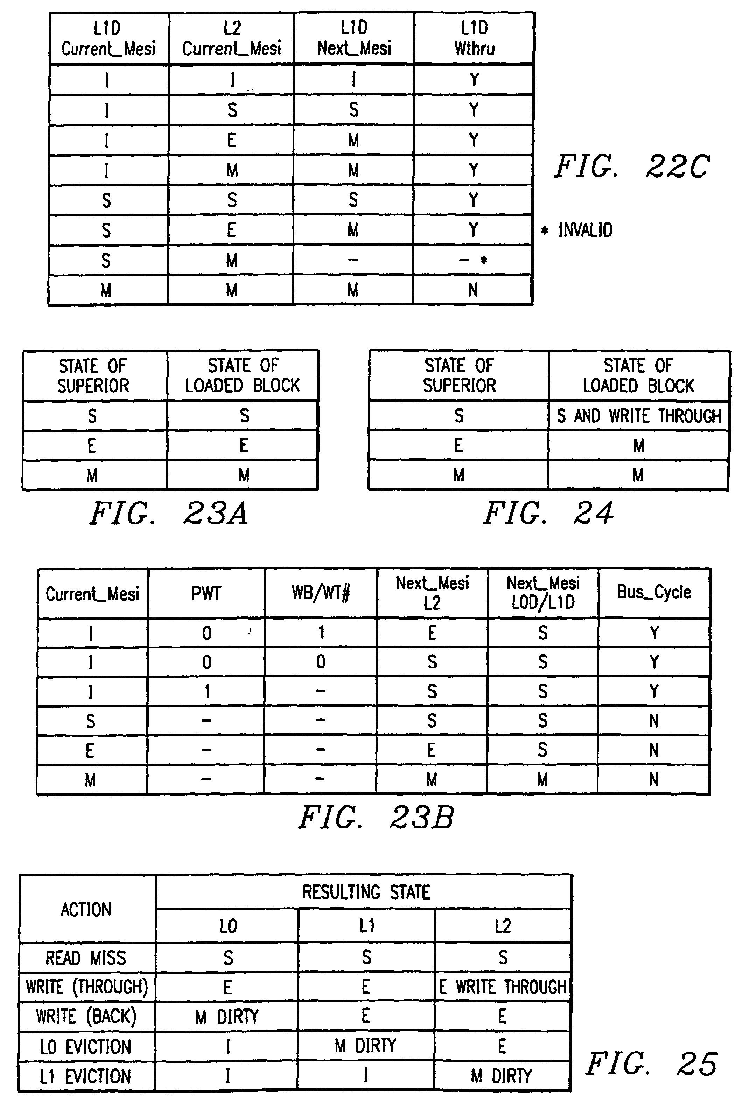

Referring to Figures 22 - , one embodiment of the state of each of the cache levels with a write-allocate and a no write-allocate policy is described. In L2 14, if a no write allocated then the write is just posted on the bus. If a write -allocate policy is used, there a write on the bus is done first followed by a burst fill. The state of the line is I, S, or E depending on external factors, such as those shown in Figure 9.

For L0D 18 and L1D 16_{d}, if the policy is no write-allocate then the write is simply passed on to the next level. If a read hit occurs on that next level then the data is written at that level and the cache coherency state is updated accordingly. If the policy is write-allocate, then that cache level, for example L1D 16_{d}, will inform the next level of cache, L2 14 in this example, about the write and do a line fill from L2 14. The relevant bytes will then be modified in L1D 16_{d}. The final MESI state of L1D 16_{d} is dependent of the current L2 14 MESI state. For example, if L2 14 is S then L1D 16_{d} will be S, if L2 14 is E then L1D 16_{d} will be M, and if L2 14 is M then L1D 16_{d} will be M. Additionally, L2 14 will also update its MESI state and do a bus write if the L2 14 MESI state is S. If the state is S, the final MESI state for L2 14 will be S or E based on external conditions. If the MESI state of L2 14 is E or M, the final MESI state for L2 14 will be M.

In a multi-level cache hierarchy consisting of levels L0 18, L1D 16_{d} and L2 14 for example, the L2 cache 14 is coupled to the system bus B, and the L1D cache 16_{d} is preferably loaded from the L2 cache 14, while the L0 cache 18 is preferably loaded from L1D 16_{d}. A MESI or other coherency protocol can be applied to each level of cache hierarchy with the following clarifications:

If a cache is being loaded from its superior on a read miss, the state of the loaded cache block is as shown in Figure 23. The cache picks up the state of the superior block, with the exception that when the superior is in the M state, the loaded block gets the E state, and no dirty bits are set. This provides a simplification in that the cache block will never be in the M state unless dirty bits are set. If there is only one dirty bit being kept per block, the M state is the dirty indicator, and no additional dirty bits are needed. If there is more than one dirty bit, they can be used to maintain a finer resolution of dirty status.

When the cache's superior is in the S state, the data may be shared with other caches, so the loaded cache block must also be in the S state to reflect knowledge of that sharing. Otherwise, the cache superior is in the E or M state, guaranteeing that no other cache holds that data, and the loaded cache block must go to one of those states (as opposed to the S state) to indicate that no write-through is needed to flush the data out of other caches. When a cache block is loaded, it contains the same data as its superior, so it is not modified with respect to that superior. Hence, even when the superior is in the M state, the cache gets loaded in the E state, meaning no dirty bits are set.

If a cache is being loaded from its superior on a write miss, the state of the loaded cache block is as shown in Figure 24.

Referring to Figure 25, if a multilevel cache read misses at all levels, all levels go to the shared state. The first write performs a write-through to all levels, and out to the system bus B. Then, all levels of cache go to the exclusive state. The write-through to the system bus B is needed to tell any other caches or relevant devices on the bus B to invalidate their contents. Subsequent writes move the lowest level cache to the M state. Higher level caches only move to the M state when modified blocks are evicted from lower level caches, and these dirty victim blocks are written to the cache superior.

In the above scenario, the modified state indicates that the cache block is modified or dirty with respect to the main memory 5. In a multilevel cache hierarchy, if each level obeys the above rules, when an inferior cache level is in the modified state, it is both dirty with respect to the main memory 5 and with respect to its cache superior. If in a multilevel cache hierarchy all levels are marked modified, they all contain more recent data than the main memory 5. However, L0D's 18 data is newer than L1D's 16_{d}, which is in turn newer than L2's 14. This first embodiment does not provide the ability to designate a cache block as dirty only with respect to its cache superior and not with respect to main memory 5, but an additional functionality is provided for this purpose in an alternative embodiment.

In the above described first embodiment, a first write to blocks in the shared state results in a write-through to the bus B. However, in an alternative embodiment, write-through to all levels of the cache hierarchy is not necessary. The write-through to the bus B advantageously provides cache coherency, but within the cache hierarchy, this alternative embodiment protocol method and circuitry uses write-back, rather than write-through when the block is in the shared state.

If all cache levels L0 18, L1D 16_{d} and L2 14 are in the shared state and a write occurs write-back is used within the cache hierarchy. Therefore, L0 18 will be locally dirty with respect to L1D 16_{d} and L2 14, but a write-through to the bus B is done so that data in other caches or devices can be invalidated if necessary. As a result, the L0 cache 18 block is dirty with respect to L1D 16_{d} and L2 14, but not dirty with respect to the main memory 5. In other words, L0 18 is locally dirty with respect to its superiors, but the cache system as a whole is consistent with main memory 5. The advantage of this alternative embodiment is that the first write-through can be eliminated. This results in fewer memory transactions for L1D 16_{d} and L2 14, therefore saving power.

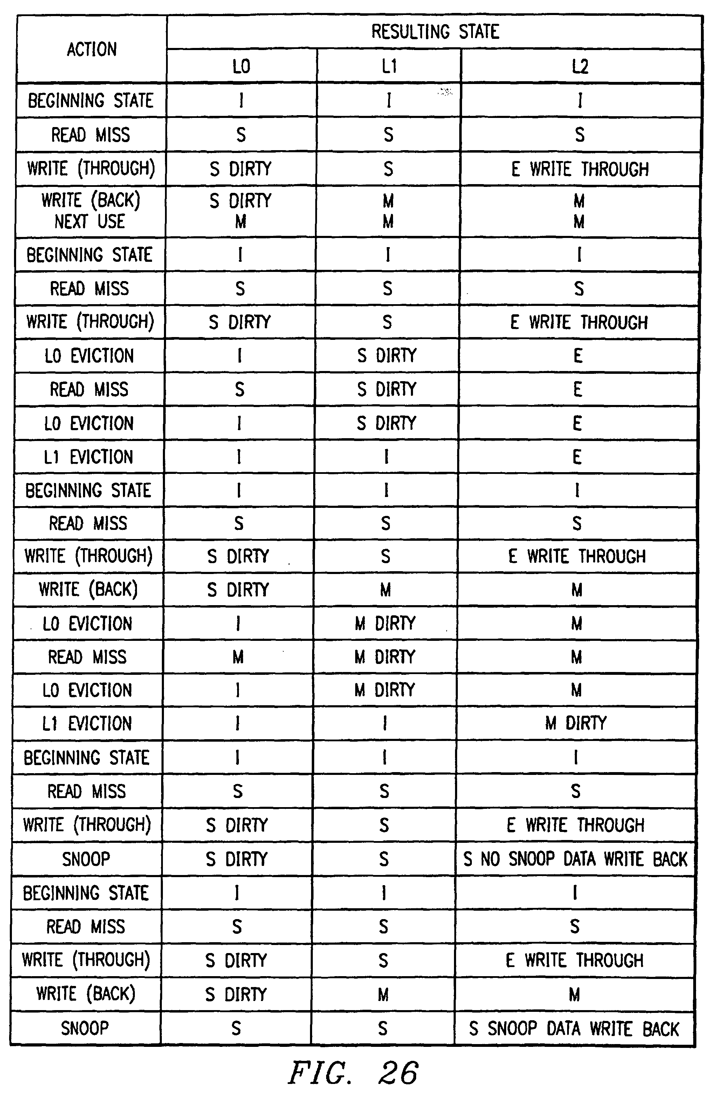

When doing this first write, and doing write-back instead of write-through, the MESI states of the cache superiors L1D 16_{d} and L2 14 have to be modified. This operation can be described as tag write-through, in the sense that the address path through the rams are not written, and the relevant LRU states for L1D 16_{d} and L2 14 do not need to be updated. In the above described alternate embodiment, L1D 16_{d} goes from S to E, and passes the tag write-through up to L2 14, which also goes from S to E. The data is written to main memory 5 but is not written to the L1D cache 16_{d} or the L2 cache 14. When the next write occurs, L0 18 goes from E to M. Figure 26 shows the state transitions, in a system implementing the alternative embodiment described above, of L0 18, L1D 16_{d} and L2 14 for different series of actions.

In the previously described first system embodiment, dirty bits could only be set when a cache block was in the M state. In the alternative system embodiment, dirty bits can be set with the cache block in the S, E and M states. When a snoop occurs, with cache blocks in the E state but no cache blocks in the M state, main memory 5 is consistent with the cache, and no snoop data write-back need occur. At the same time, the state of all the cache blocks is changed from E to S. This may leave some cache blocks in the S state with dirty bits set. If a snoop hit occurs and some cache blocks are in the M state, the block has to be written out to main memory before the blocks move to the S state. Additionally, a partial internal write-back can be performed. Thereby writing back the internal cache levels just sufficiently to assemble all data which supersedes main memory, and after that, stopping further write-backs.

The dirty status of a block is preferably independent of its MESI status. The MESI state of any given cache indicates whether the cache is the sole owner of the data, and whether main memory 5 is consistent with that data. The dirty bits indicate that a cache block is "relatively" dirty, that is, dirty with respect to its cache superior, or in the case of L2 14, dirty with respect to main memory 5.

If L0 18, L1D 16_{d} and L2 14 cache blocks are loaded into the exclusive state on a miss, then the first write-through is advantageously eliminated. Therefore, the tag write-through operation is not needed for that cache block.

As an additional benefit of this protocol method and circuitry, the L1D 16_{d} and L2 14 caches do not need to perform byte writes, but only writes to entire cache blocks, or of data equal to the size corresponding to which dirty bits are kept. For example, if L1D 16_{d} has 32 byte blocks and 8 byte dirty status granularity (four dirty bits per block), L2 14 needs to be able to write with 8 byte granularity.

The circuitry and method described above can be used to perform tag write-through but not data write-through, thereby advantageously eliminating undesirable write-throughs within a cache hierarchy, while still performing write-throughs to the system bus to maintain cache coherency.

Once a line has been read into the cache and has been modified internally without updating the external memory, it must eventually be written back to the bus B. Writing a cache line out to the bus B is fairly expensive in terms of the amount of time it takes. Processors commonly require four transfers of 64-bits each to write a cache line to the bus B. Standard cache architecture does not keep track of which of the 4 64-bit chunks actually contain modified data. One embodiment of the present invention provides a cache system 56 which keeps track of which 64-bit quantities need to be written back upon line eviction, and a BIU 12 which will perform a single 64-bit transfer of data if only 64-bits of the cache line contain dirty data and will perform a full 256-bit writeback otherwise.

Standard cache architecture only records the state of the cache on a line-by-line basis. The solution to the problem is to record state for every part of the sub-line which could be written out to the bus B as one transaction. In other words, if it takes 4 transfers to write back a cache line, then record state for all four segments of that line. In our particular implementation of this scheme, an additional bit of state for each of the four sub-line segments is required. We have called these bits the "dirty bits." These bits only have significance when the cache is in a write-back mode. When the cache does not send a write out to the bus B, the cache records which of the 4 sublines was affected by that write with the dirty bits. When the cache line is evicted from the cache, these dirty bits are given to the BIU 12. If only one of these dirty bits is set, then the BIU 12 will perform a single 64-bit write on the bus. If more than one dirty bit is set, a standard 256-bit cache-line burst writeback will occur. ???

In the framework of the conventional MESI protocol, the dirty bit or bits are only significant in the M-state. In a multilevel cache hierarchy 56, however, there may be multiple concepts of "dirty". For instance, in one embodiment, the inferior caches implement the concept of being dirty with respect to a superior cache, yet clean with respect to the external world. As a result, the state might be shared-dirty or exclusive-dirty. Therefore, the dirty bits of the inferior caches can be advantageously used to keep status regarding both dirty with respect to superior cache and dirty with respect to external world. When the inferior cache is in the S or E state, the dirty bits are keeping track of dirty with respect to superior cache status. When the inferior cache is in the M state, the dirty bits are keeping track of dirty with respect to external world. That is, when an inferior cache is in the M state and it is evicted and absorbed by it's superior cache, the dirty bits from the inferior cache are merged in with the dirty bits of the superior cache. However, if the line from the inferior cache were in the S or E state when it was evicted, the dirty bits would not be merged in with the dirty bits of the superior cache because the dirty bits mean dirty with respect to superior cache but clean with respect to external world.

In an embodiment of a multilevel cache coherency protocol unnecessary updating of perceived modified data from lower to higher levels of the cache hierarchy is eliminated. The MESI protocol is used for exemplary purposes in the description below. However, the embodiment described below could be executed in other coherency protocols. Additionally, the L0 cache 18 is used in the example below, but the concept could be applied to all levels of cache in a multilevel cache hierarchy.

Consider in the multilevel cache system previously described, the situation where a line is modified in L1D 16_{d} (MESI state is M) and the line does not exist in L0 18. When the processor pipeline requests any data from the same line, it is fetched from L1D 16_{d} and is cached in L0 18 as well as supplied to the pipeline. As per MESI protocol, the MESI state of this newly cached line in L0 18 is marked as M (modified). The data in this line can be read or written by the processor and the MESI state remains as M. Whenever this line in L0 18 needs to be evicted, it must be copied back to L1D 16_{d} to maintain cache coherency as it had an M state. Because this line was brought to L0 18 in the M state, it is unknown whether the line was actually modified in L0 18. This problem can be solved by introducing a new state in the cache coherency protocol. For example, in a MESI protocol the state could be called MM (modified-modified). Whenever a line in a cache level is modified it is marked as MM and not M, thereby distinguishing whether a line has been actually modified in a cache level as opposed to having been allocated in that cache level with M state but remaining unchanged. This embodiment advantageously distinguishes if a line in the cache hierarchy has been actually modified. Therefore, unnecessary data traffic between various levels of caches in the memory hierarchy 56 is eliminated, enabling higher throughput and saving power.

In a further embodiment, a conditional write-allocate policy is provided for a multilevel cache hierarchy to reduce overall processor stalls. In a cache design, the read/write allocation policy controls when a block/line of data is made resident in the on-chip cache. If the line is cached on a read miss, then the cache is said to have a read-allocate policy. On the other hand, if a line is brought into the cache when a write misses a line, the cache is said to write-allocate (also called fetch or write). If the write miss is just written to main memory and is not followed by a fetch and allocate, the cache is said to be no-write allocate (also called write-around). While either write miss policy could be used with write-back or write-through cache, generally write-back caches use write-allocate (hoping that subsequent writes to that line will hit on-chip cache) and write-through caches often use no-write-allocate (since subsequent writes to that line will still have to go to main memory).

In a multilevel cache hierarchy, with write-back/write-through control, neither write-allocate or no-write-allocate offers the optimum performance. If no-write-allocate is used, the advantages of multiple on-chip caches which could have been working in parallel to derive more throughput are not utilized. Not doing any write-allocate would result in lower cache hit ratios. On the other hand, if write-allocate is used at all times on all levels of cache, holding of all cache levels occurs and therefore, the available concurrency is not utilized. For example, doing write-allocate all the way to the L0D level 18 will hold the L0D cache 18 during write accesses unnecessarily and prevent further L0D access from the L/S units 40.

Therefore, in this embodiment the good characteristics of both the write or no write-allocate policy are employed. In a write-allocate policy, a write stall occurs on a first write to a line. In a no-write-allocate policy, there may not be a longer write stall (due to write-through buffers), but there still is an overall longer write miss penalty. Therefore, in the cache level 18 closest to the execution units 54, preferably no-write-allocate is done to minimize write stalls. In the cache level 14 closest to the main memory 5 a write-allocate is preferably always done to absorb subsequent writes and thereby reduce write stall. In the intermediate levels of cache 16_{d}, a conditional write- allocate is preferably done. If a write miss at an intermediate level 16_{d} hits the next level of cache 14 in the hierarchy (going away from the execution units 54), the data is fetched from the next level 14, and the write is allocated and absorbed at the current intermediate level 16_{d}. If the write miss at the current intermediate level 16_{d} misses the next level 14, preferably no-write-allocate is done at the current intermediate level 16_{d}, the write miss is passed to the next level 14, and the current level 16_{d} is done with the write.

By using an approach exploiting different write allocation policy at different levels of a multilevel cache, better overall performance is achieved than if the same allocation policy were used at all levels of the cache. The result of this approach is increased system throughput and higher performance. The above described embodiment keeps the lowest level cache 18 free to serve other read/write requests to give improved performance. While one embodiment is described above, the levels which will and will not be write allocated depend on variables such as cache size, access time. Additionally, the concept described above could be applied to any multilevel cache hierarchy.

Many processor architectures, such as microprocessor 10, utilize inquires, back invalidations, and the write-once policy to maintain primary (on-chip) to secondary cache (off-chip) inclusion property and consistency. The primary cache may be single level cache or a multilevel cache hierarchy. The inquire and back invalidation cycles are snoop cycles generated by external secondary cache to the processor cache hierarchy for inclusion and consistency maintenance. The inquire cycle causes a write-back if the line is in a modified state in the processor cache. The back invalidation cycle is initiated by an external cache to invalidate a line in the processor cache if the address snooped hits the processor cache. The write-once policy is used to ensure that the external cache will always be aware of processor potentially modified lines. This, as mentioned earlier, is necessary for inclusion and consistency maintenance. An external cache can use, for example, the MESI state control processor input signal (WB/WT#) to force the processor into a write-once mode.

An external signal, such as a WB/WT# (write-back/write-through) signal, can be used to define a processor data cache line as write-back or write-through on a line by line basis. As a result, this signal can be used to dictate whether a cache line is in the S or E MESI state in the processor data cache. The external cache may allow the processor to go into E state only if the external cache itself is making a transition from E to M state or is already in the M state (because of snoop response latency). ??? A write on a S state line in the processor data cache generally causes a write-through operation to be performed. The final MESI state (S or E) of the line is determined by the WB/WT# input signal driven by the external cache at the end of the external write operation. Thus the processor pipeline is stalled until the external write completes.

For a processor with on-chip multilevel cache hierarchy it is undesirable to stall the pipeline on a write-through operation. In an embodiment of the present invention, a solution to this problem described herein advantageously follows the desired cache coherency transitions for inclusion and consistency, and also prevents processor pipelines from stalling on write-through operations, thereby achieving higher throughput from the system.

One embodiment pipelines the mechanism for determination of the final state for each level of memory hierarchy on a write-through operation, instead of all levels of memory hierarchy depending on an external state control signal (WB/WT#). This allows the lower levels of memory hierarchy 56 (ones closer to the execution unit 54) to not wait for the transaction to complete before they can release the stall signal to the execution pipeline. This, in turn, eliminates the latency before the next instruction can be executed and delivers higher performance over the conventional method.

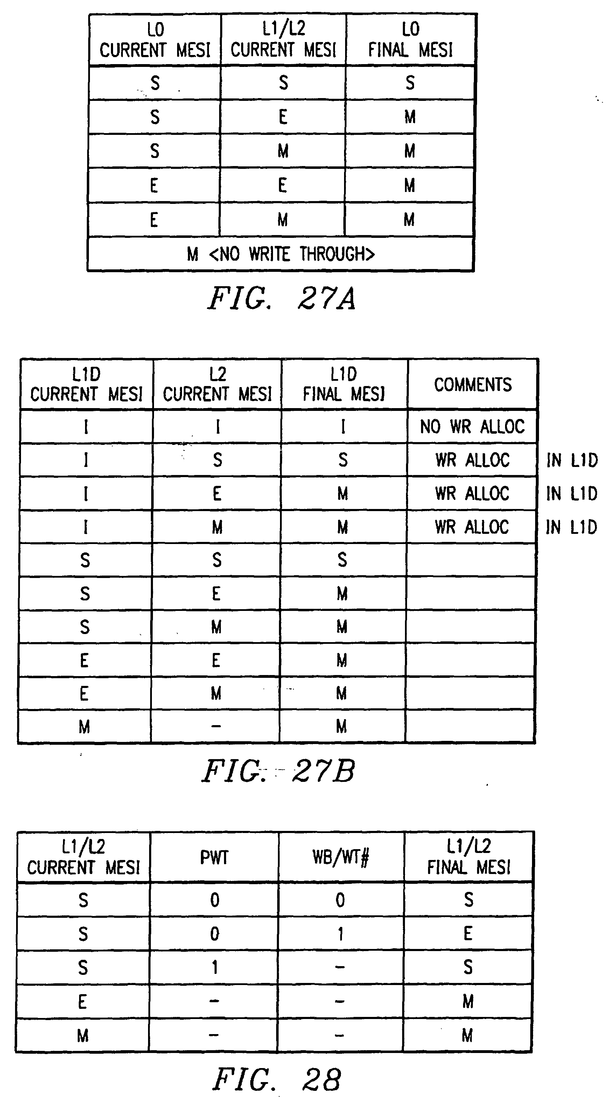

A pipelined write-once MESI protocol for a memory hierarchy 56 with three levels of on-chip cache is described below. However, the MESI protocol is used for exemplary purposes only and the embodiment described below could be implemented with other coherency protocols. Additionally, this approach can be generalized to n levels of cache with m deep coherency protocol pipelining. For example, a three level cache hierarchy 56 comprising caches L0 18, L1D 16_{d} and L2 14 has L0 18 interfaced to the execution pipeline 54 and L2 14 interfaced to the bus B. In an embodiment, the final MESI state of L0 18 on a write-through operation depends only on the current MESI state of L1D 16_{d} /L2 14 (superiors) and does not depend on the WB/WT# input signal. L1D 16_{d} and L2 14 always have the same MESI state and their final MESI state on a write-through operation depends on their current MESI state, PWT, and WB/WT# input signal. Figures 27 and 28 detail the relevant state transitions.

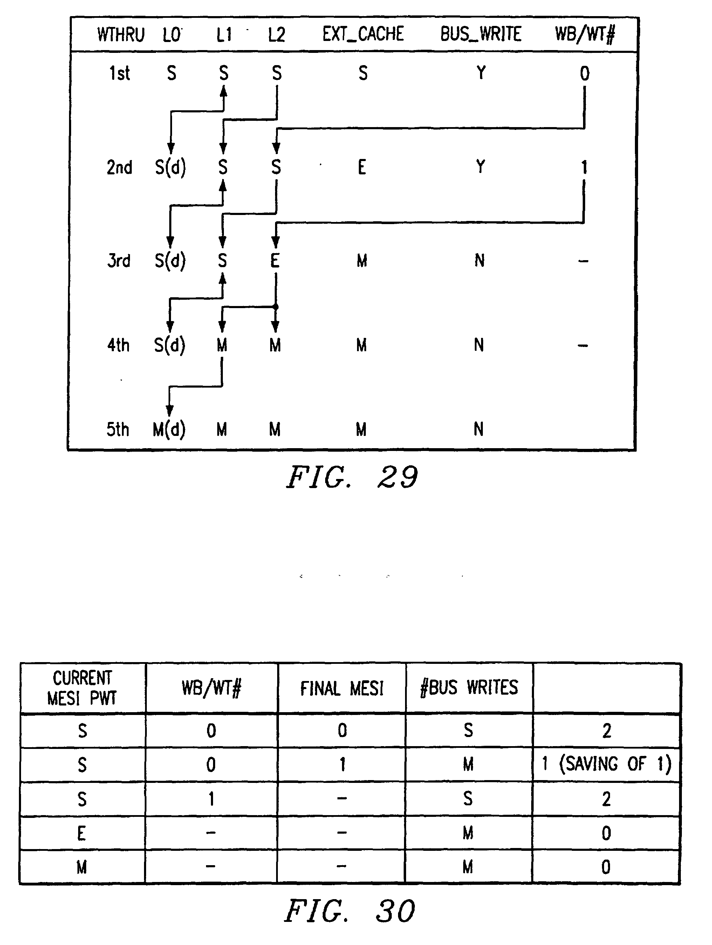

Figure 29 is a causality table summarizing the pipeline MESI state changes of the processor memory hierarchy 56 and an external cache on a sequence of write-through operations where the processor cache lines initially are in the shared state. Assume that PWT is 0. The lines and the directional arrows show the causality relationship. For example, as shown in row 1 of the table, the 1st write-through does result in a bus B write. After the bus B write, the final state of the external cache is E and the WB/WT# input signal is low. On the 1st write-through operation, the final state of the L0 cache 18 is determined by the L1D 16_{d} current state. Therefore, L0 18 goes to Sd (shared state with dirty bits set). The final state of L1D 16_{d} and L2 14 remains S state after the 1st write-through as the WB/WT# is low after the bus B write. On the 2nd write- through, L0 18 again stays in Sd (shared, dirty) state based on L1D 16_{d} current state. L1D 16_{d} and L2 14 at the end of the 2nd bus B write transition to E state as the WB/WT# signal input is high (1). On the 3rd write-through, L0 18 transitions to M state based on current E state of L1D 16_{d} and there is a write-through on the bus B as the processor has the exclusive copy of the data line. However, L1D 16_{d} and L2 14 also transition from E to M state on the 3rd write-through operation. This solution distinctively introduces the concept of pipelining the MESI protocol on write-throughs for memory hierarchy 56. Resulting advantages include increased system throughput and thus higher performance.

A processor 10 generated write may hit the processor memory hierarchy 56 but may still have to be written to the secondary off-chip memory due to cache coherency protocol requirements. If this processor generated write on the bus B is aligned within the bus write size, it will involve only one bus operation. However, if the processor generated write is not aligned within the bus write size, it will involve two bus operations to write the two halves of bus misaligned data. Since bus cycles dissipate significantly more power than on-chip writes, it is desirable to minimize bus B transactions and thereby reduce power dissipation. Additionally, since a shared bus is a bottleneck in determining the performance of a system, a reduction in bus traffic may also translate in increased system throughput. The below described embodiment eliminates, in some circumstances, one of two bus operations on bus misaligned write-through writes.

The present embodiment provides a bus B that can handle, for example, any contiguous 8-byte aligned writes. The on-chip memory hierarchy can handle, for example, 16-byte aligned writes of 1 to 4 contiguous bytes. Thus, any read/write transaction which is 16-byte aligned and may or may not be 4/8 byte aligned can be serviced without any penalty by the processor memory hierarchy in one clock cycle. This is different from the Pentium™ processor which considers a 2-byte or 4-byte operand that crosses a 4-byte boundary to be misaligned. In addition, in the Pentium™ processor an 8-byte operand that crosses an 8-byte boundary is misaligned. The Pentium™ bus can write in one bus cycle any contiguous bytes of data aligned at 8-byte boundary.

In one embodiment, the processor could break down a 4-byte misaligned word access into two separate transactions of so that the bus never sees any misaligned writes. In an even more advantageous approach, the final state of the processor on-chip data cache hierarchy line(s) is preferably determined by the external state control processor input signal. For example, the WB/WT# (write-back/write-through) signal allows a processor data cache line to be defined as write-back or write-through on a line by line basis. As a result, it determines whether a cache line is in the S or E state in processor cache L2 14. When the final state of the L2 cache 14 is S, it implies that the addressed data may be shared with other resources in the system and the data is consistent with the system memory 5. The E state implies that the processor has the exclusive copy of the addressed data which is consistent with the main memory 5.

The present embodiment, on bus B misaligned write-through writes, takes advantage of the final state of the cache line at the end of the first cycle in deciding the need for doing the second of bus B misaligned writes or eliminating it. If the final state of the cache line at the end of first bus B write is E, it implies that this cache has the exclusive copy and can locally modify it without doing an external bus B write. Therefore, what would have been a second misaligned bus B write, is treated as a local cache data modification thereby eliminating the second bus B write. The final state of the L2 cache 14 line goes to M state instead of E state as the second misaligned bus B write got absorbed on local on-chip cache 14. If the final state of the L2 cache line at the end of first bus B write is S, it implies the line has to stay shared and the cache proceeds with the second bus B misaligned write as usual. Figure 30 summarizes the state transitions and the number of bus transactions involved on bus misaligned write-through writes. The above described process and circuitry saves one bus cycle in one of three cases where external bus B writes are generated. This solution advantageously reduces the number of bus B transactions on bus B misaligned write-through writes, resulting in power savings and reduced bus B traffic.

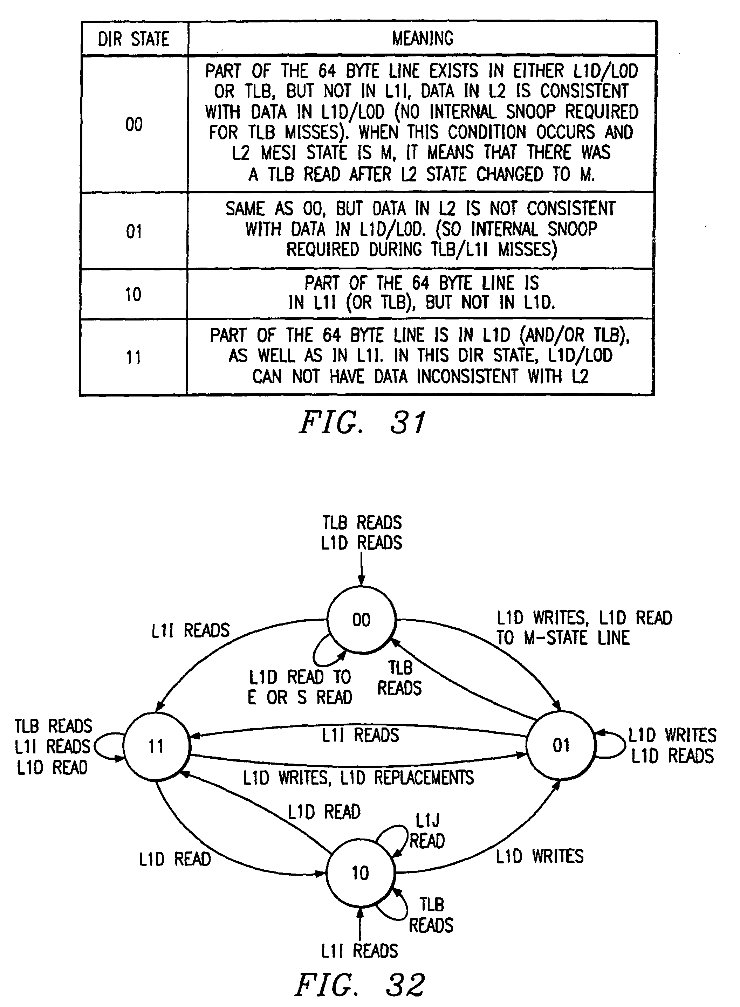

In one embodiment, the L2 14 tag rams, shown in Figure 15, have two bits of directory information per 64 byte L2 14 line for maintaining coherence among the three units, L1D 16_{d}, L1I 16ᵢ and TLB 50 that obtain their data from the memory through the L2 cache 14. The encoding of the two directory (dir) bits in L2 14 is shown in Figure 31.

The next dir state in L2 14 depends on the current dir states and read/write actions from the TLB 50, L1I 16ᵢ and L1D 16_{d}, as shown in Figure 32.

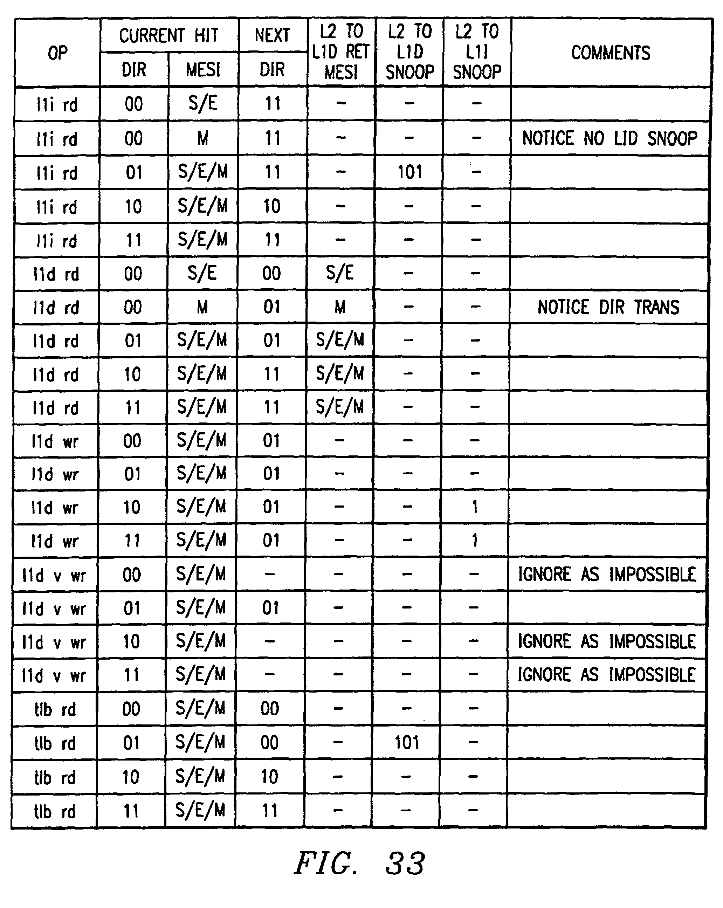

Generally, a conventional 2 bit dir scheme has 3 only states (00, 10, 11). In one embodiment of the memory hierarchy 56, dirty data is kept for lower level caches with respect to L2 14. Therefore, a fourth state (01) is added to the 2 bit dir scheme to provide this capability. The details of operation are illustrated in Figure 33.

The internal coherence (snoop) requests to the L1D 16_{d} or L1I 16_{d} are generated from L2 14 based on the dir states when special coherence action is required at the L2 cache 14. The special coherence actions may be required due to, for example, one of the following situations:
1. External snoop: when there is an external snoop request from the bus B, and the snoop address is a hit in L2 14.
2. WBINVD/Flush: the microcontroller asks to write-back and invalidate due to the WBINVD instruction or the flush signal on the bus B.
3. Locked accesses: during a locked read access, if the line is present in the cache hierarchy, L2 14 asks the lower level to take coherence actions.
4. TLB 50 reads: if a read request from the TLB 50 hits in L2 14, data is gathered from the lower level caches and supplied to TLB 50.
5. L2 14 replacements: if a line is being replaced from L2 14, L2 14 initiates coherence actions in the lower levels.
6. L1I 16ᵢ reads: when L1I 16ᵢ submits a read request to L2 14 and L2 14 has data inconsistent with L0D 18 /L1D 16_{d}, an internal snoop command is generated to L1D 16_{d} to obtain correct data before it is supplied to L1I 16ᵢ.
7. L1D 16_{d} writes: the copies in L1I 16ᵢ, if any, are invalidated.

Note that when there is an L1I 16ᵢ read and a modified copy exists in the data side (L0D 18/L1D 16_{d} /L2 14), or when there is an L1D 16_{d} write request and a copy exists in L1I 16ᵢ, there is either self modifying code being executed, or there is false sharing between code and data. Additionally, on a victim write-back from L1D 16_{d} to L2 14, the dir state could be changed from 00 to 01 if there were dir states associated with each 32 byte line. However if dir states are maintained for only 64 byte lines. On victim write-backs from L1D 16_{d} to L2 14, the dir state should remain the same.

The snoop interface from L2 14 to L1D 16_{d} preferably comprises the signals L2_to_L1D_pa, L2_to_L1D_snoop, L2_to_L1D_inval, L2_to_L1D_return_data, L1D_to_L2_done and L1D_to_L2_snoop_data_ready signals. Similarly, the L1I 16ᵢ interface is controlled by the L2_to_L1I_inval and L1I_to_L2_done signals. Note that no snoop or return_data signals are needed to L1I 16ᵢ if the Icache never keeps modified data.

If the L2_to_L1I_inval signal is active, L1I 16ᵢ changes the state of the cache line to I and returns the _done signal. The _inval command to L1I 16ᵢ is given only when the dir state in L2 14 says it has a copy (10,11), and an internal snoop condition occurs (situations 1,2,3,5 and 7 above). If the dir state is kept at 64 byte granularity (instead of 32 bytes) two invalidate commands must be issued to L1I 16ᵢ.

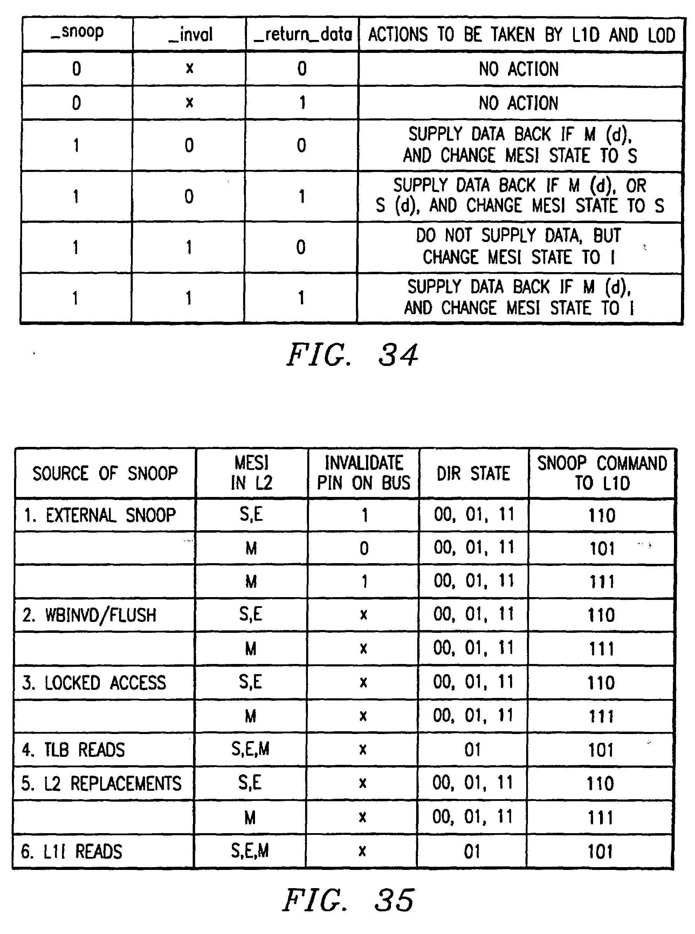

In one embodiment, the internal snoop commands sent to L1D 16_{d} through the signals _snoop, _inval and return_data are as shown in Figure 34. The snoop commands to L1D 16_{d} are generated when one of the above conditions for internal snoop is present (except situation 7) and the dir bit in L2 14 points to L1D 16_{d}.

The snoop commands generated by L2 14 to L1D 16_{d} for the various situations defined above are summarized in Figure 35. When the snoop command is 110 (i.e. no return data is expected), L1D 16_{d} and L0D 18 must make sure that the state change occurs within two processor clock cycles. For the cases when return data is expected, there are no upper bounds on the number of cycles used to return the _snoop_data_ready and _done signals active. For any situations not mentioned in Figure 35, the snoop command from L2 14 to L1D 16_{d} should be 000.

Locked accesses are commonly used in multiprocessor systems to maintain reliable communication. For example, when one processor is moving data to main memory 5, if other processors access those memory locations during that time, the reliability of the data is questionable. The integrity of memory operations can be protected through the use of locked accesses. Two sources of locked accesses in the memory hierarchy 56 are locked read modify write (r-m-w) requests from the TLB 50 and locked accesses generated by the microcontroller 48. The BIU 12 asserts a LOCK# signal on the bus B during the duration of the r-m-w cycle. The locked accesses are non-cacheable. However, it is possible that after a memory location is accessed by the processor 10 without locking and is stored in the cache hierarchy, a locked r-m-w access is initiated to the same location. In that case, during the locked read part, the line is removed (called lock-eviction) from the cache hierarchy before the non-cacheable read request is placed on the bus B. During a lock-eviction, the line is invalidated in all the caches, and, if it has been modified in one of the caches, it is also written back to the memory 5.

In one embodiment, utilizing an x86 architecture, in locked accesses from the TLB 50, the main TLB 50 generates these requests when the 'a' bit or the 'd' bit needs to be set in a page directory entry (pde) or a page table entry (pte). These locked requests are 4-byte aligned, and only one locked read followed by one locked write are performed for every TLB 50 generated r-m-w access. The TLB 50 generated locked accesses are preferably fed directly to the L2 cache 14 (they do not pass through the lower level caches).

In locked accesses from the microcontroller 48, the microcontroller 48 initiates a locked r-m-w access for valid instructions with a 'lock' prefix, for instructions that need to be locked by default, when updating segment descriptors updations and for TSS (Task State Segment) descriptor tests. The microcontroller 48 generated locked memory accesses are submitted to the L0D cache 18 preferably through the execute unit 54 in several steps. The steps involve a combination of opcodes and operations on a discrete.

The first step is evict and verify. In one embodiment, the L0D cache 18 checks whether the locked access is misaligned across 32 byte boundaries and whether the access crosses a 4K page boundary. If the access does not cross a 32 byte boundary, then L0D 18 submits a lock evict request to the L2 cache 14 preferably through L1D 16_{d}. The L2 cache 14 performs the eviction. If the access crosses a 32 byte boundary, then L0D 18 initiates two lock-evict cycles to L2 14. In addition, if the access crosses a 4K page boundary, then L0D 18 also performs a µDTLB 38 lookup for the second lock-evict. Thus, there could be zero, one, or two victim write-backs preceding a locked read on the bus B. The victim write-back burst cycles are not locked on the bus B. If the evict and verify operation completes without an exception then there is no exception that can occur during the subsequent load and store operations.

The second step is a locked load. After the lock evictions are complete, microcode sends load operations to L0D 18 with the LOCK discrete set. In one embodiment, if the locked access is 8-byte misaligned, then the BIU 12 breaks it into two 8-byte aligned read accesses. If the access is 16-byte misaligned, L0D 18 breaks the request into two separate locked reads and submits to L2 14. In both the misaligned cases, the BIU 12 drives the SCYC signal (split cycle- this signal indicates that the locked operation is misaligned) active on the bus B, and the LOCK# signal remains active through the reads.

The third step is a locked store. Following the locked loads, microcode issues the stores. The LOCK discrete may be reset with the stores. On misaligned cases, the store transaction is broken in the same manner as the locked load step.

The fourth step is a terminate locked cycle transaction. The memory hierarchy 56 continues to prepare for locked operations until the locked cycle is terminated. To terminate a locked cycle the microcode resets the LOCK discrete while a load effective address (LEA) opcode is sent to the execution unit 54.

As on-chip cache size increases, the amount of time it takes to perform a cache flush also increases. For certain types of operations, it is common for the processor 10 to manipulate data in the on-chip cache and to then flush the cache so that the external world sees the result. For these types of operations (a common example being graphics processing), the performance degradation due to a large cache size can become prohibitive. Therefore, an embodiment is described below by which a memory write-back of just part of the cache can be performed. Through this mechanism, only the part of the cache which contains the data which must be written to memory is flushed from the cache. Additionally, an embodiment is described in which the processor 10 is internally able to change the ownership of a block of memory. As a result, the modified lines in a block of memory are written back to the external world, but the lines are kept in the cache. This allows switching of an area of memory from being a write-through region to a write-back region.

Another problem experienced in a multiple bus-master environment involves external snoop. An external snoop is an inquiry from the external world about the status of a particular cache line. The processor 10 will respond by telling the external bus B whether the processor 10 has cached the line. If the processor 10 has modified data, it will write that line back to the external system. However, many devices deal with blocks of memory. When a device wants ownership of the block of memory, it must perform an external snoop to each cache line in that block. An embodiment is described below by which an external snoop which snoops an entire block of memory with just one operation can be performed.

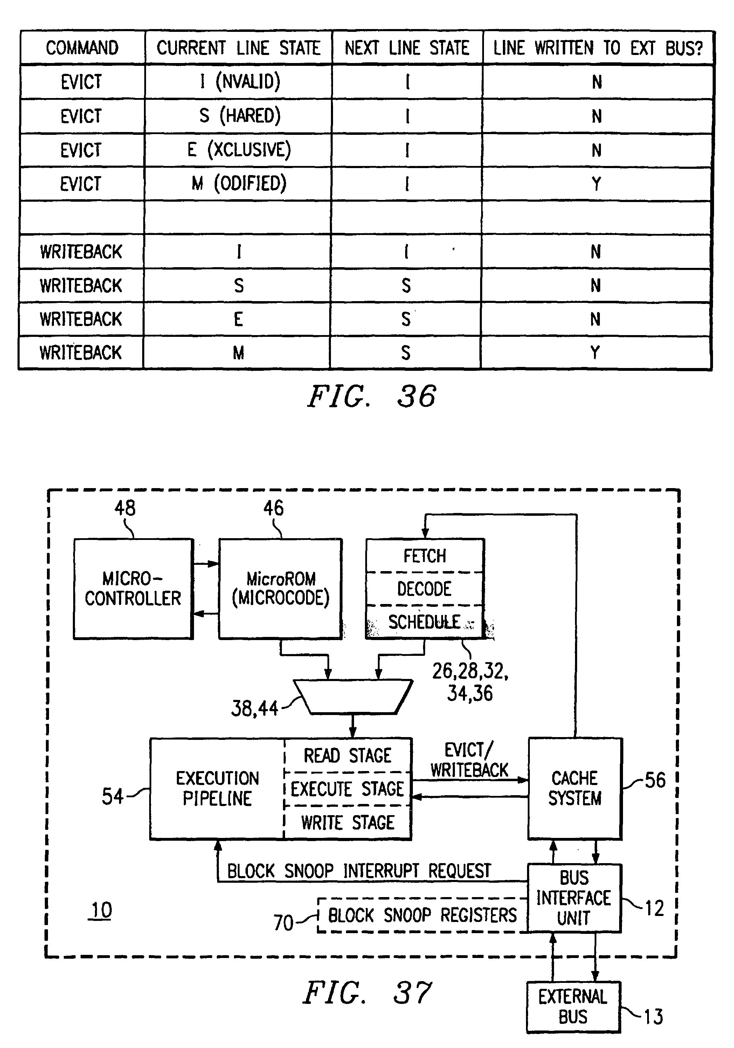

These embodiments utilize two unique cache opcodes, "Evict", and "Writeback". When the cache receives the Evict opcode and its associated address, it checks to see if the supplied address is contained within the cache. If the address is present, the cache performs an eviction of that line. That is, if the line is in a modified state, the line is written back to the external bus B and the line is invalidated in the cache. If the line is present in the cache, but not modified, the line is merely invalidated. Conversely, when the cache receives the "Writeback" opcode, if the referenced line is in the modified state, the line is written back to the bus B and marked as "not modified". If the referenced line is in the cache but not in a modified state, the line will remain in the cache. However, the processor will relinquish ownership of the line. In the MESI framework, these rules translate to the relationships illustrated in Figure 36.

Currently in some processor architectures, such as x86, there is only one instruction in the instruction set which can perform a cache write-back. For the x86 architecture this is the WBINVD instruction. This instruction will flush the entire cache and then invalidate it. Therefore, after the WBINVD instruction, the cache will be empty. There are several ways to implement the partial cache flush. One way is to define a new opcode. This opcode would have 2 parameters built into it -- an address and a scalar. The address is the address of the bottom of the block of memory, and the scalar is the size of the memory block. If consistency with the current x 86 instruction set is desired, the standard "mod/rm reg" byte should be used to describe the address and the scalar value. Another possibility would be to define MSRs (machine specific registers) which will cause the partial cache flush when they are written. Whatever the mechanism used to initiate the activity, it will perform a flush on the desired address block. The operation would proceed as follows (in pseudocode):

To write-back and invalidate the block:
tmp_addr = initial_address
while ( tmp_addr < initial_address + block_size )
   Evict (tmp_addr)
   tmp_addr = temp_addr + line_size

To write-back but not invalidate the block:
tmp_addr = initial_address
while ( tmp_addr < initial_address + block_size )
   Writeback (tmp_addr)
   tmp_addr = temp_addr + line size

The block snoop functions similarly, however, the address and block size are provided from the external bus B, and an external interrupt is generated by the BIU 12 to interrupt the instruction stream to the microcontroller 48. The mechanisms are shown in Figure 37. Referring to Figure 37, registers 70 in the BIU will store the external snoop base address and block size. The "block snoop interrupt request" line is then raised, which causes the execution pipeline 54 to start the block snoop microcode. The block snoop microcode retrieves the snoop base address and block size information from the BIU 12 and performs the following:
tmp_addr = initial_address
while ( tmp_addr < initial_address + block_size )
{Evict | Writeback} ( tmp_addr )
tmp_addr = tmp_addr + line_size

A unique address generation that allows greater performance than that of traditional address generation techniques can be used with the memory hierarchy 56. The problem of address generation in x86 processors is divided into two stages. The basic flow is: effective address ---> linear address ----> physical address. The physical address is the final address which is sent to the cache.

An effective address is an abstract representation of a memory location. The effective address is defined in terms of a segment and a combination of a "base" register, and "index" register, a "scale," and a "displacement." The basic form of the effective address is SEG: [base+index*scale+displacement]. The value of base+index*scale+displacement is known as the "offset" into the segment. SEG is known as the "segment," and each segment will have an associated "segment base address" which is the start of the segment in the linear address space. The linear address is calculated as "segment base" + "offset." Circuitry is shown in Figure 38 that generates the linear address in an efficient fashion.

The conversion from linear address to physical address is generally performed by a TLB. In the x86 architecture, addresses are 32-bits wide, and the lower 12-bits of the linear address and the physical address are always the same. Thus, only the upper 20-bits of the linear address need to be translated into a 20-bit physical address.

Because a hierarchy of TLB's is discussed above, it is necessary to distinguish between them. Preferably, the µdTLB 38 produces the physical address for L0D 18. Rather than requiring the actual linear address to form the physical address, the circuit shown in Figure ___ produces the physical address, only requiring a 1-bit "carry-in" signal and two numbers which when added together will produce the linear address. For example, if a+b+ci=la, where la is the upper 20-bits of the linear address, a and b are 20-bit signals, and ci is a 1-bit signal, then the circuit can determine the 20-bit physical address translation by only looking at a, b, and ci. The advantage is that the a and b signals are generated much earlier than the upper bits 20-bits of the linear address, and ci is generated at least one gate delay before the upper 20-bits of the linear address.

An N-entry fully associative µdTLB 38 contains N physical-to-linear address translations. Therefore, it will contain N linear addresses, and the N corresponding physical addresses. If a TLB is fully associative there is no restriction to the physical addresses which are stored in the a TLB. Another popular TLB implementation is a direct mapped TLB. In this arrangement, there are some restrictions on the addresses which can simultaneously coexist in the TLB, however, the access time is generally much quicker than a fully associative implementation.

A carry-save adder is a device which takes three numbers and produces two numbers which when added together will produce the sum of those three input numbers. Thus, the outputs of a CSA from the address generator in Figure____ can be used to feed the µdTLB 38. The operation of the µdTLB 38 tag compare circuit is shown in Figure ___. This arrangement provides the speed performance of a direct mapped µdTLB 38, and the architectural performance of a fully associative µdTLB 38. Figure ____ illustrates how to build a "carry-save content-addressable memory." This is a more hardware-efficient implementation of the concept.

A preferred embodiment has been described in detail hereinabove. It is to be understood that the scope of the invention also comprehends embodiments different from those described, yet within the scope of the claims. For example, while a MESI like cache coherency protocol is described above, other cache coherency protocols could be used. Although specific details are used above to provide a thorough understanding of the present invention, a person of ordinary skill in the art will understand that the present invention may be practiced without those details. Additionally, in some cases well known procedures, methods, components and circuits which may be used in the practice of the present invention were not described. Words of inclusion are to be interpreted as nonexhaustive in considering the scope of the invention. The various techniques of the present invention may be applied to and used by any type of processor, including, but not limited to, digital signal processors.

## Claims

1. Method of providing data coherence in a microprocessor (10) having a multilevel cache (L0,L1,L2) with the highest level (L2) connectable to an external bus (BUS) and with a superior cache storing data in plural first cache entries and an inferior cache storing data in plural second cache entries, each first and second cache entry having a corresponding MESI cache tag designating the data in said entry as either modified M, exclusive E, shared S or invalid I and each first and second cache entry having dirty bits indicating modified data said method comprising :
upon a first write hit to a second cache entry in state S in the inferior cache
storing the write data to the lowest inferior cache but leaving the MESI cache tag of the write hit second cache entry in the lowest inferior cache (L0) in the S state,
setting the dirty bits of the write hit second cache entry to indicate the modified data in the inferior cache (L0),
storing write data to a main memory on the external bus without storing this write data to a superior cache (L1,L2), and
setting in the highest level superior cache the MESI cache tag of the first cache entry corresponding to the write hit second cache entry to the E state; and
upon eviction of a second cache entry from an inferior cache
if the MESI cache tag corresponding to the second cache entry in the inferior cache indicates modified M, then absorbing the second cache entry into a corresponding first cache entry in the superior cache and merging the dirty bits corresponding to the second cache entry in the inferior cache with the dirty bits of the corresponding first entry in the superior cache, and
upon allocation of data in state M from the superior cache to the inferior cache, the MESI cache tag of the second cache entry in the inferior cache is set to state M, and
upon changing the data in a second entry in the inferior cache,
setting the corresponding MESI state as modified-modified to indicate modified M and modified with respect to the superior cache such that copying back data between the inferior cache and the superior cache is eliminated whenever the data is evicted and the state is M.

## Patentansprüche

1. Verfahren für die Schaffung einer Datenkohärenz in einem Mikroprozessor (10), der einen Mehrebenen-Cache-Speicher (L0, L1, L2) besitzt, wovon die höchste Ebene (L2) mit einem externen Bus (BUS) verbindbar ist und wovon ein oberer Cache-Speicher Daten in mehreren ersten Cache-Einträgen speichert und ein unterer Cache-Speicher Daten in mehreren zweiten Cache-Einträgen speichert, wobei der erste und der zweite Cache-Eintrag ein jeweiliges MESI-Cache-Etikett haben, das die Daten in dem Eintrag entweder als modifiziert, M, oder als exklusiv, E, oder als gemeinsam genutzt, S, oder als ungültig, I, bezeichnet, wobei jeder erste und jeder zweite Cache-Eintrag Dirty-Bits besitzt, die modifizierte Daten angeben, wobei das Verfahren umfasst:
bei einem ersten Schreib-Treffer in einem zweiten Cache-Eintrag im Zustand S im unteren Cache-Speicher
Speichern der Schreibdaten in dem niedrigsten unteren Cache-Speicher, jedoch Belassen des MESI-Cache-Etiketts des zweiten Cache-Eintrags mit Schreibtreffer im niedrigsten unteren Cache-Speicher (L0) im S-Zustand,
Setzen der Dirty-Bits des zweiten Cache-Eintrags mit Schreibtreffer, um die modifizierten Daten in dem unteren Cache (L0) anzugeben,
Speichern von Schreibdaten in einem Hauptspeicher über den externen Bus, ohne dass diese Schreibdaten in einem oberen Cache-Speicher (L1, L2) gespeichert werden, und
Setzen des MESI-Cache-Etiketts des ersten Cache-Eintrags, der dem zweiten Cache-Eintrag mit Schreibtreffer entspricht, in dem oberen Cache-Speicher der höchsten Ebene auf den E-Zustand; und
bei Räumung eines zweiten Cache-Eintrags aus einem unteren Cache-Speicher
falls das MESI-Cache-Etikett, das dem zweiten Cache-Eintrag in dem unteren Cache-Speicher entspricht, modifiziert, M, angibt, Absorbieren des zweiten Cache-Eintrags in einem entsprechenden ersten Cache-Eintrag in dem oberen Cache-Speicher und Zusammenführen der Dirty-Bits, die dem zweiten Cache-Eintrag in dem unteren Cache-Speicher entsprechen, mit den Dirty-Bits des entsprechenden ersten Eintrags in dem oberen Cache-Speicher und
bei Zuweisung von Daten im Zustand M von dem oberen Cache-Speicher zu dem unteren Cache-Speicher Setzen des MESI-Cache-Etiketts des zweiten Cache-Eintrags im unteren Cache-Speicher auf den Zustand M und
bei Änderung der Daten im zweiten Eintrag im unteren Cache
Setzen des entsprechenden MESI-Zustands als modifiziert-modifiziert, um modifiziert, M, und modifiziert in Bezug auf den oberen Cache-Speicher anzugeben, so dass ein Zurückkopieren von Daten zwischen dem unteren Cache-Speicher und dem oberen Cache-Speicher verhindert wird, wann immer Daten geräumt werden und der Zustand M ist.

## Revendications

1. Procédé d'obtention de cohérence de données dans un microprocesseur (10) comportant une mémoire cache (L0, L1, L2) à niveaux multiples, dont le niveau le plus élevé (L2) est apte à être connecté à un bus externe (BUS) et dont une mémoire cache supérieure stockant des données dans plusieurs premières entrées de mémoire cache et une mémoire cache inférieure stockant des données dans plusieurs deuxièmes entrées de mémoire cache, chacune des première et deuxième entrées de mémoire cache ayant un indicateur de mémoire cache MESI correspondant, désignant les données dans ladite entrée en tant que, modifiées M, exclusives E, partagées S ou invalides I, et chacune des première et deuxième entrées de mémoire cache comportant des bits de saletés indiquant des données modifiées, ledit procédé comprenant :
lors d'une première occurrence d'écriture dans une deuxième entrée de mémoire cache dans l'état partagé S, dans la mémoire cache inférieure
le stockage des données d'écriture dans la mémoire cache inférieure la plus basse, mais laissant l'indicateur de mémoire cache MESI de la deuxième entrée de mémoire cache à occurrence d'écriture, dans la mémoire cache inférieure la plus basse (L0), dans l'état partagé S,
l'établissement des bits de saleté de la deuxième entrée de mémoire cache à occurrence d'écriture pour indiquer les données modifiées dans la mémoire cache inférieure (L0),
le stockage de données d'écriture dans une mémoire principale sur le bus externe, sans stocker ces données d'écriture dans une mémoire cache supérieure (L1, L2), et
l'établissement, dans la mémoire cache supérieure de niveau le plus élevé, de l'indicateur de mémoire cache MESI de la première entrée de mémoire cache correspondant à la deuxième entrée de mémoire cache à occurrence d'écriture, à l'état exclusif E ; et
lors de l'éviction d'une deuxième entrée de mémoire cache d'une mémoire cache inférieure
si l'indicateur de mémoire cache MESI correspondant à la deuxième entrée de mémoire cache dans la mémoire cache inférieure, indique modifié M, alors absorption de la deuxième entrée de mémoire cache dans une première entrée correspondante de mémoire cache, dans la mémoire cache supérieure ; et fusion des bits de saleté correspondant à la deuxième entrée de mémoire cache dans la mémoire cache inférieure, avec les bits de saleté de la première entrée correspondante dans la mémoire cache supérieure, et
lors de l'attribution de données dans l'état modifié M en provenance de la mémoire cache supérieure, à la mémoire cache inférieure, l'indicateur de mémoire cache MESI de la deuxième entrée de mémoire cache dans la mémoire cache inférieure est établi à l'état modifié M, et
lors d'un changement des données dans une deuxième entrée dans la mémoire cache inférieure,
l'établissement de l'état MESI correspondant en tant que modifié-modifié pour indiquer modifié M et modifié par rapport à la mémoire cache supérieure, de telle sorte qu'une recopie de données entre la mémoire cache inférieure et la mémoire cache supérieure, est éliminée lorsque les données sont évincées et que l'état est modifié M.
